# EUROPÄISCHE PATENTSCHRIFT

(11) **EP 0 838 382 B1**
(45) Veröffentlichungstag und Bekanntmachung des Hinweises auf die Patenterteilung: **06.12.2000**
(21) Anmeldenummer: 97112922.6
(22) Anmeldetag: 28.07.1997
(51) Int. Cl.: B60T 8/18

(54) **Lastabhängig steuerbare Bremskraftregelventil-Einrichtung**
Load dependent controlled brake force regulating valve installation
Installation de valve pour la correction de la force de freinage commandée en fonction de la charge

(30) Priorität: 04.10.1996 DE 19641027
(43) Veröffentlichungstag der Anmeldung: 29.04.1998
(73) Patentinhaber: WABCO GmbH & Co. OHG, 30453 Hannover (DE)
(72) Erfinder: Fauck, Gerhard, 30559 Hannover (DE); Kiel, Bernd, 31515 Wunstorf (DE); Tammen, Jürgen, 29690 Lindwedel (DE)
(74) Vertreter: Schrödter, Manfred, Dipl.-Ing.

(56) Entgegenhaltungen:
- EP-A- 0 216 092
- DE-A- 3 026 252
- DE-A- 3 146 938
- DE-A- 3 209 247
- DE-A- 3 209 248
- DE-A- 3 216 407
- DE-C- 713 843

## Beschreibung

Die Erfindung betrifft eine lastabhängig steuerbare Bremskraftregelventileinrichtung für eine druckmittelbetätigte Fahrzeugbremsanlage gemäß dem Oberbegriff des Patentanspruchs 1.

Eine derartige aus der DE 32 16 407 A1 bekannte Bremskraftregelventileinrichtung wird z. B. in der Bremsanlage eines Motorfahrzeugs oder eines Anhängerfahrzeugs angeordnet, um den Druck in den Bremszylindern dem jeweiligen Beladungszustand des Fahrzeugs anzupassen. Die Anpassung erfolgt selbsttätig, indem, z. B. bei einer mechanisch betätigten Bremskraftregelventileinrichtung, eine mit einer Steuerwelle verbundene Steuerscheibe, die eine schräge Fläche aufweist, ein Stellglied verschiebt, welches mit einem Einlaß- und Auslaßventil zusammenwirkt. Je nach Stellung der Steuerscheibe und somit auch je nach Stellung des auf der schrägen Fläche der Steuerscheibe aufliegenden Stellgliedes wird von der Bremskraftregelventileinrichtung ein Druck ausgesteuert, der bei der gegebenen Beladung für die Abbremsung des Fahrzeugs erforderlich ist.

Bei dieser bekannte Bremskraftregelventileinrichtung sind das Einlaß- und Auslaßventil, ein zum Betätigen des Einlaß- und Auslaßventils dienender Bremsdruckregelkolben und das Stellglied gleichachsig zueinander und in Richtung ihrer Längsachse bewegbar in einem Gehäuse angeordnet. Die aus der Steuerwelle und der Steuerscheibe bestehende Antriebseinrichtung für das Stellglied ist quer zur Längsachse von Stellglied, Einlaß- und Auslaßventil und Bremsdruckregelkolben angeordnet.

Durch die Anordnung der Steuerwelle und der Steuerscheibe quer zur Längsachse des Stellgliedes läßt es sich nicht vermeiden, daß von der Steuerscheibe Querkräfte auf das Stellglied ausgeübt werden.

Der Erfindung liegt die Aufgabe zugrunde, eine Bremskraftregelventileinrichtung der eingangs erwähnten Art zu schaffen, bei welcher am Stellglied auftretende Querkräfte weitestgehend vermieden werden.

Diese Aufgabe wird mit der im Patentanspruch 1 angegebene Erfindung gelöst. Weiterbildung und voreilhafte Ausgestaltungen der Erfindung sind in den Unteransprüchen angegeben.

Die Erfindung bietet insbesondere den Vorteil, daß durch die gleichachsige Anordnung des Stellelementes bzw. Betätigungselementes der Antriebseinrichtung zum Stellglied und die gleiche Bewegungsrichtung von Stellelement bzw. Betätigungselement und Stellglied die Einleitung von Querkräften auf das Stellglied und auch auf das Stellelement bzw. Betätigungselement vermieden wird.

Gemäß einer vorteilhaften Weiterbildung des Erfindungsgegenstandes ist direkt am Stellelement eine Steuerkurve angeordnet, die mit einer an einem als Betätigungselement für das Stellglied dienenden Gleitstück anageordneten weiteren Steuerkurve in der Weise zusammenwirkt, daß bei einer Drehbewegung des Stellelementes um seine Längsachse, je nach Drehrichtung, das zwischen dem Stellelement und dem Stellglied der Bremskraftregelventileinrichtung angeordnete Betätigungselement vom Stellelement in Richtung auf das Einlaß- und Auslaßventil der Bremskraftregelventileinrichtung zu verschoben wird, wobei das Stellglied der Bremskraftregelventileinrichtung vom Betätigungselement und indirekt vom Stellelement in Richtung auf das Einlaß- und Auslaßventil zu und von einer Rückstellkraft, z. B. einem Druckmittel, in Richtung vom Einlaß- und Auslaßventil weg verschoben wird.

Gemäß einer weiteren vorteilhaften Weiterbildung des Erfindungsgegenstandes ist in der Mantelfläche des Stellelementes eine quer zur Längsachse des Stellelementes verlaufende Steuerkurve angeordnet, mit der ein am Lagerbock oder am Gehäuse angeordnetes stiftartiges Bauteil in der Weise zusammenwirkt, daß bei einer Drehbewegung des Stellelementes um seine Längsachse, je nach Drehrichtung, das Stellelement sich in Richtung auf das Einlaß- und Auslaßventil der Bremskraftregelventileinrichtung zu bzw. von diesem weg bewegt, wobei das Stellglied der Bremskraftregelventileinrichtung vom Stellelement in Richtung auf das Einlaß- und Auslaßventil zu und von einer Rückstellkraft, z. B. einem Druckmittel, in Richtung vom Einlaß- und Auslaßventil weg verschoben wird.

Vorteilhafterweise kann das stiftartige Bauteil an einem zapfenartigen Bauteil angeordnet sein, welches um seine Längsachse drehbar am Lagerbock oder am Gehäuse angeordnet ist. Durch diese Anordnung des stiftartigen Bauteiles ist es möglich, das Stellelement in Richtung der Längsachse des Stellgliedes auf dieses zu oder von diesem weg zu verstellen.

Gemäß einer vorteilhaften Weiterbildung der erfindungsgemäßen Bremskraftregelventileinrichtung ist die mit dem Stellelement und dem Betätigungselement sowie mit dem stiftartigen Bauteil zusammenwirkende Steuerkurve der Antriebseinrichtung an einem Lagerbock angeordnet, dessen Lage relativ zum Stellelement und zum Betätigungselement veränderbar ist. Durch Verändern der Lage des Lagerbockes läßt sich die Position des das Stellelement mit einem Teil des Fahrzeugs verbindenden Hebels zur Steuerkurve und somit die Kennlinie des von der Bremskraftregelventileinrichtung ausgesteuerten Druckes zur Winkellage des Hebels justieren.

Wird auf die Veränderbarkeit der Lage des Lagerbockes verzichtet, so kann als Lagerbock für das Stellelement vorteilhafterweise auch der die Öffnung oder auch Gehäuseausnehmung zur Aufnahme der Antriebseinrichtung aufweisende Bereich des Gehäuses dienen, so daß auf den Lagerbock bildende zusätzliche Bauteile verzichtet werden kann.

Dadurch, daß das Stellelement und gegebenenfalls auch das Betätigungselement gleichachsig mit dem Stellglied, dem Einlaß- und Auslaßventil und dem Bremsdruckregelkolben angeordnet ist, wird der mit dem Stellelement verbundene Hebel bei einem Verstellvorgang um die Längsachse von Stellelement, Stellglied, Einlaß- und Auslaßventil und Bremsdruckregelkolben verschwenkt, was sich vorteilhaft auf die Anordnungsmöglichkeiten der Bremskraftregelventileinrichtung auswirkt.

Anhand der Zeichnung werden nachfolgend drei Ausführungsbeispiele der Erfindung näher erläutert.

Es zeigen:
- Fig. 1: eine Bremskraftregelventileinrichtung mit einer gleichachsig zum Stellglied angeordneten Antriebseinrichtung für das Stellglied;
- Fig. 2: die Antriebseinrichtung für das Stellglied der in Fig. 1 gezeigten Bremskraftregelventileinrichtung;
- Fig. 3: die Einrichtung zum Justieren der Antriebseinrichtung für das Stellglied der Bremskraftregelventileinrichtung;
- Fig. 4: eine Antriebseinrichtung für das Stellglied der Bremskraftregelventileinrichtung, die gegenüber der Antriebseinrichtung gemäß Fig. 1 einen einfacheren Aufbau aufweist;
- Fig. 5: eine weitere Antriebseinrichtung für das Stellglied der Bremskraftregelventileinrichtung und
- Fig. 6: einen Ausschnitt der Antriebseinrichtung gemäß Fig. 5, welcher die Steuerkurven der Antriebseinrichtung in perspektivischer Ansicht zeigt.

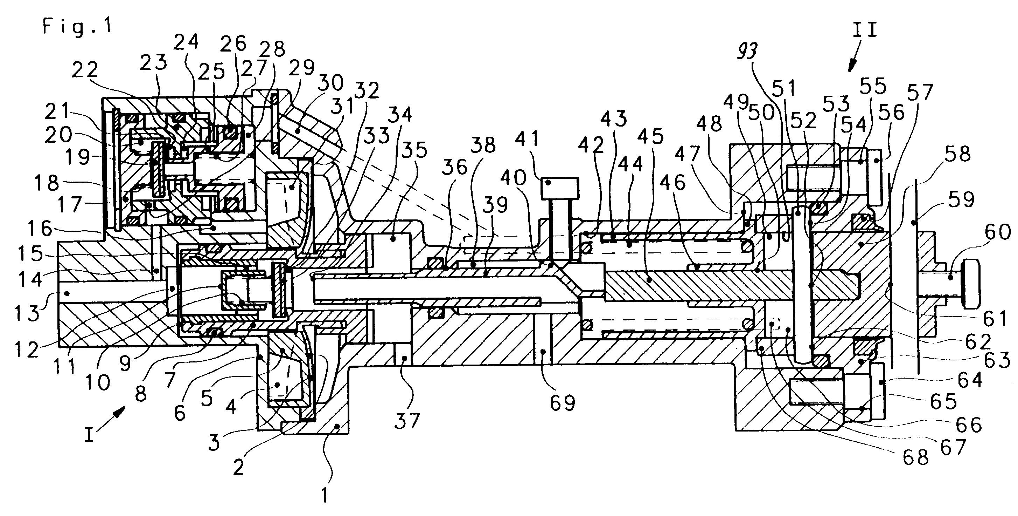

Die in Fig. 1 dargestellte Bremskraftregelventileinrichtung (I) besitzt ein aus einem ersten Gehäuseteil (1) und einem zweiten Gehäuseteil (6) bestehendes Gehäuse (1, 6), in welchem ein als Stufenkolben ausgebildeter Bremsdruckregelkolben (7, 3), der aus einem als Hohlkolben ausgebildeten Kolben (7) und einer mit diesem verbundenen Membran (3) besteht, in Richtung der Längsachse des Gehäuses (1, 6) bewegbar angeordnet. Die Membran (3) ist mit ihrem äußeren Randbereich zwischen dem ersten Gehäuseteil (1) und dem zweiten Gehäuseteil (6) eingespannt. Der Kolben (7) ist in einer Gehäuseausnehmung mittels eines Dichtringes (8) abgedichtet verschiebbar angeordnet. Im Hohlraum des Kolbens (7) ist ein Einlaßsitz (32) angeordnet, der mit einem ebenfalls im Hohlraum des Kolbens (7) angeordneten Ventilschließglied (33) ein Einlaßventil (32, 33) eines kombinierten Einlaß- und Auslaßventils (32, 33, 34) für die Bremskraftregelventileinrichtung (I) bildet. Das Ventilschließglied (33) wird von einer Feder (10) in Richtung auf den Einlaßsitz (32) zu beaufschlagt und an diesem gehalten. Mit ihrem dem Ventilschließglied (33) abgewandten Ende stützt die Feder (10) sich an einem im Kolben (7) angeordneten topfförmigen Teil (11) ab, welches über Stege (15) mit dem Kolben (7) verbunden ist. An dem Kolben (7) sind mehrere sich radial nach außen, vom Kolben (7) weg erstreckende Rippen (4) angeordnet, deren der Membran (3) zugewandte Stirnflächen Teile eines Kegelmantels bilden. Im Gehäuse (1, 6) ist ein Einlegering fest angeordnet, der mehrere sich radial nach innen erstreckende Rippen (5) aufweist, in deren Zwischenräume die Rippen (4) des Kolbens (7) berührungslos eingreifen und deren der Membran (3) zugewandte Stirnflächen Teile eines entgegengesetzt verlaufenden Kegelmantels bilden. Der Bremsdruckregelkolben (7, 3) weist so eine konstante Wirkfläche (9) und eine unter der Bewegung des Bremsdruckregelkolbens (7, 3) veränderliche Wirkfläche (2) auf.

An dem zweiten Gehäuseteil (6) des Gehäuses (1, 6) der Bremskraftregelventileinrichtung (I) ist seitlich ein Vorsteuerventil angeordnet, welches ein einstückig mit dem Gehäuse (1, 6) der Bremskraftregelventileinrichtung (I) ausgebildetes Gehäuse aufweist. Das Gehäuse wird von einem Deckel (17) verschlossen, wobei zwischen Dekkel (17) und Gehäuse ein Dichtring angeordnet ist.

Im Gehäuse des Vorsteuerventils ist ein als Hohlkolben ausgebildeter Vorsteuerkolben (25) mittels eines Dichtrings (26) abgedichtet in Richtung der Längsachse des Gehäuses (1, 6) bewegbar angeordnet. Der Vorsteuerkolben (25) trägt einen Auslaßsitz (21), der mit einem im Gehäuse geführten Ventilschließglied (19) ein Auslaßventil (21, 19) eines kombinierten Einlaß- und Auslaßventils (22, 21, 19) bildet. Mit einem gehäusefesten Einlaßsitz (22) bildet das Ventilschließglied (19) ein Einlaßventil (19, 22) des kombinierten Einlaß- und Auslaßventils (22, 21, 19). Der ringförmige Einlaßsitz (22) ist in einem Gehäuseeinsatz (23) des Vorsteuerventils angeordnet, welcher mittels eines auf seinem Umfang angeordneten Dichtringes abgedichtet im Gehäuse des Vorsteuerventils angeordnet ist. Eine Feder (27), die sich mit ihrem einen Ende am Gehäuse abstützt, beaufschlagt mit ihrem anderen Ende den Vorsteuerkolben (25) in Richtung auf das Ventilschließglied (19) zu und hält den Auslaßsitz (21) am Ventilschließglied (19). Das Einlaßventil (22, 19) befindet sich dabei in seiner Offenstellung. Das Ventilschließglied (19) wird von einer weiteren Feder (18), die sich am Deckel (17) abstützt, in Richtung auf den Auslaßsitz (21) und den Einlaßsitz (22) zu beaufschlagt. Über das kombinierte Einlaß- und Auslaßventil (22, 21, 19) ist eine Vorsteuerkammer (24) des Vorsteuerventils in Abhängigkeit von der Stellung des Vorsteuerkolbens (25) mit einer Eingangskammer (20) oder mit einer Auslaßkammer (28) des Vorsteuerventils verbindbar oder gegen beide absperrbar. Die Eingangskammer (20) des Vorsteuerventils ist über eine in der Wand des Gehäuseeinsatzes (23) angeordnete Durchgangsöffnung (29) und eine in der Wand des Gehäuseteiles (6) angeordnete Druckmittelleitung (14), die als Gehäusekanal ausgebildet ist, mit einem Steuereingang (13) der Bremskraftregelventileinrichtung (I) verbunden. Der Steuereingang (13) steht mit einer Druckmitteleingangskammer (12) der Bremskraftregelventileinrichtung (I) in Verbindung, die von der konstanten Wirkfläche (9) des Bremsdruckregelkolbens (7, 3) begrenzt wird. Über eine als Gehäusekanal ausgebildete weitere Druckmittelleitung (16) im Gehäuseteil (6) ist eine von der Membran (3) des Bremsregelkolbens (7, 3) begrenzte Steuerkammer (31) mit der Vorsteuerkammer verbunden. Von der der Steuerkammer (31) abgewandten Seite des Bremsdruckregelkolbens (7, 3) wird eine als Arbeitskammer dienende Druckmittelausgangskammer (35) der Bremskraftregelventileinrichtung (I) begrenzt. Die Druckmittelausgangskammer (35) der Bremskraftregelventileinrichtung (I) ist mit einem Druckmittelausgang (37) verbunden.

Im ersten Gehäuseteil des Gehäuses (1, 6) der Bremskraftregelventileinrichtung (I) ist ein als lastabhängig verstellbares Stellglied (39) für die Bremskraftregelventileinrichtung (I) dienender hohler Stößel in Richtung der Längsachse des Gehäuses (1, 6) der Bremskraftregelventileinrichtung (I) bewegbar angeordnet. Das Stellglied (39) ist an seinem dem Ventilschließglied (33) des kombinierten Einlaß- und Auslaßventils (32, 33, 34) zugewandten Ende als Auslaßsitz (34) ausgebildet und bildet mit dem Ventilschließglied (33) ein Auslaßventil (33, 34) des kombinierten Einlaß- und Auslaßventils (32, 33, 34).

Die Gehäusewand des ersten Gehäuseteiles des Gehäuses (1, 6) weist einen sich in Richtung auf das Stellglied (39) zu erstreckenden und das Stellglied (39) umgebenden ringförmigen Vorsprung auf, der als Führung (36) für das Stellglied (39) dient. Die Führung (36) besitzt auf ihrer dem Stellglied (39) zugewandten Seite eine umlaufende Nut, in welcher ein Dichtring angeordnet ist, der an der äußeren Mantelfläche des Stellgliedes (39) dichtend anliegt. Der Dichtring dichtet die Druckmittelausgangskammer (35) und eine als Entlüftungsraum (38) dienende Kammer gegeneinander ab. Der Entlüftungsraum (38) ist über ein als Druckmittelauslaß (69) dienende Durchgangsöffnung in der Wand des ersten Gehäuseteiles (1) mit einer Druckmittelsenke, z. B. mit der Atmosphäre, verbunden. Eine im Gehäuse (1, 6) angeordnete, als Gehäusekanal ausgebildete Druckmittelleitung (30) verbindet die Auslaßkammer (28) des Vorsteuerventils mit dem Entlüftungsraum (38).

Das erste Gehäuseteil der Bremskraftregelventileinrichtung (I) weist eine in Richtung der Längsachse des Gehäuses (1, 6) verlaufende und sich zum freien Ende des Gehäuses (1, 6) hin erweiternde abgestufte Öffnung (42) auf. In der Öffnung (42) ist eine Antriebseinrichtung (II) für das Stellglied (39) angeordnet.

Die Antriebseinrichtung (II) besitzt einen Lagerbock (68, 63), der von einem abgestuft ausgebildeten und mit einem Flansch (63) versehenen rohrförmigen Körper (68) gebildet wird. Der Lagerbock (68, 63) besitzt somit eine in Richtung der Längsachse von Stellglied (39) sowie Einlaßventil (32, 33) und Auslaßventil (34, 33) und Bremsdruckregelkolben (7, 3) verlaufende Öffnung (93), bzw. Durchgangsöffnung. In zwei einander gegenüberliegenden Bereichen des Flansches (63) ist je ein als Langloch ausgebildeter Schlitz (55 und 65) angeordnet, wobei jeder Schlitz (55 bzw. 65) zur Aufnahme eines von einer Schraube gebildeten Befestigungselementes (56 und 64) dient. Mittels der in Gewindebohrungen des Gehäuses (1, 6) eingeschraubten Befestigungselemente (56 und 64) wird die Antriebseinrichtung (II) am Gehäuse (1, 6) der Bremskraftregelventileinrichtung (I) gehalten. Auf dem den kleineren Durchmesser aufweisenden Bereich des rohrförmigen Körpers (68) ist ein Dichtring (53) angeordnet, der dichtend an der Wand des den größeren Durchmesser aufweisenden Bereiches der Öffnung (42) anliegt. Im rohrförmigen Körper (68) ist ein als rotationssymmetrischer Körper ausgebildetes Stellelement (58) um seine Längsachse drehbar angeordnet. Das Stellelement (58) besitzt auf seiner dem Innenraum des Gehäuses (1, 6) zugewandten Seite einen rohrförmigen Fortsatz (43), der sich in die abgestufte Öffnung (42) hinein, in Richtung auf das dem kombinierten Einlaß- und Auslaßventil (32, 33, 34) abgewandte Ende des Stellgliedes (39) zu erstreckt. Auf seinem Umfang besitzt der rohrförmige Fortsatz (43) einen umlaufenden Vorsprung (48), mit welchem der rohrförmige Fortsatz (43) und somit das Stellelement (58) einerseits an einer Schulter (47) des Gehäuses (1, 6) und andererseits am rohrförmigen Körper (68) des Lagerbockes (68, 63) anliegt. Mittels des Lagerbockes (68, 63) und der Schulter (47) des Gehäuses (1, 6) wird das Stellelement (58) gegen eine Bewegung in Richtung seiner Längsachse gesichert.

Im Stellelement (58) ist zentrisch eine Ausnehmung (50) angeordnet, die in Richtung der Längsachse des Stellelementes (58) verläuft. An die Ausnehmung (50) schließt ein koaxial zum rohrförmigen Fortsatz (43) am Stellelement (58) angeordnetes Rohr (46) an, das sich in Richtung auf das Stellglied (39) zu erstreckt. In der Ausnehmung (50) und dem Rohr (46) ist ein als Betätigungselement (45) für das Stellglied (39) dienender weiterer Stößel in Richtung auf das lastabhängig verstellbare Stellglied (39) zu bzw. von diesem weg bewegbar angeordnet. In seinem im Stellelement (58) gelegenen Endbereich besitzt das Betätigungselement (45) eine quer zu seiner Längsachse verlaufende Durchgangsöffnung (52), in welcher ein Stift (51) befestigt ist. Das Stellelement (58) besitzt einander gegenüberliegend zwei in Richtung seiner Längsachse verlaufende, als Führung für den Stift (51) und somit als Verdrehsicherung für das Betätigungselement (45) dienende Schlitze (49 und 66), durch welche der Stift (51) mit seinen aus dem Betätigungselement (45) herausragenden Bereichen hindurchgeführt ist.

Der das Stellelement (58) aufnehmende rohrförmige Körper (68) des Lagerbockes (68, 63) weist einander gegenüberliegend zwei als Kurvenbahnen (54 und 62) ausgebildete, quer zu seiner Längsachse verlaufende Durchgangsöffnungen auf, in welche sich die Enden des Stiftes (51) hineinerstrecken. Im rohrförmigen Fortsatz (43) des Stellelementes (58) ist koaxial zum Betätigungselement (45) eine Drehfeder (44) angeordnet, die sich mit ihrem einen Ende in einer Bohrung des Gehäuses (1, 6) abstützt und mit ihrem anderen Ende in eine Bohrung (67) des Stellelementes (58) eingreift. Das aus dem Gehäuse (1, 6) herausgeführte und aus dem rohrförmigen Körper (68) herausragende Ende des Stellelementes (58) besitzt eine quer zu seiner Längsachse verlaufende Durchgangsöffnung (61), durch welche eine als Hebel (59) dienende Stange mit ihrem einen Ende hindurchgeführt ist. Mittels einer als Klemmelement dienenden, in die Stirnseite des Stellelementes (58) eingedrehten Schraube (60) ist der Hebel (59) in der Durchgangsöffnung (61) festgeklemmt. An dem freien Ende des rohrförmigen Körpers (68) des Lagerbockes (68, 63) ist ein Dichtring (57) angeordnet, der einerseits an der Mantelfläche des Stellelementes (58) und andererseits an der dem Stellelement (58) zugewandten Wand des Lagerbockes (68, 63) dichtend anliegt.

In die Wand des Gehäuses (1, 6) ist eine Schraube (41) eingedreht, an welcher das Stellglied (39) bei einer Bewegung in Richtung seiner Längsachse mit einem am Stellglied (39) angeordneten Vorsprung (40) zur Anlage bringbar ist. Die Schraube (41) dient als Anschlag, mittels welchem der Hub des Stellgliedes (39) in Richtung vom kombinierten Einlaß- und Auslaßventil (32, 33, 34) der Bremskraftregelventileinrichtung (I) weg begrenzt wird.

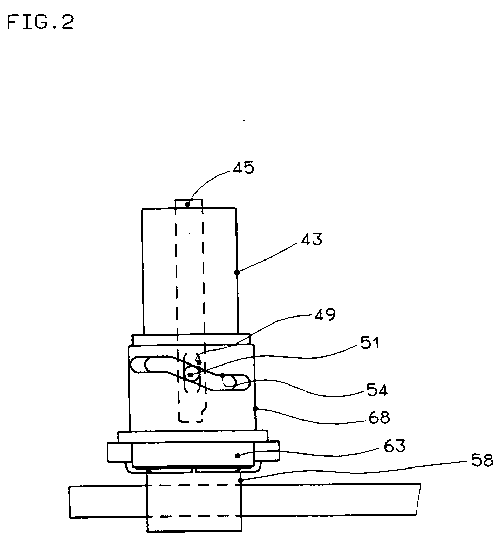

Figur 2 zeigt die Antriebseinrichtung (II) zum Verstellen des Stellgliedes (39). Da diese Antriebseinrichtung (II) gleich ist der in Figur 1 dargestellten Antriebseinrichtung (II), sind der besseren Übersicht halber gleiche Bauteile mit gleichen Bezugsziffern versehen.

In dem den Flansch (63) aufweisenden rohrförmigen Körper (68) des Lagerbockes (68, 63) ist das Stellelement (58), welches den rohrförmigen Fortsatz (43) besitzt, um seine Längsachse drehbar gelagert. An die im Stellelement (58) zentrisch angeordnete Ausnehmung schließt das Rohr an, welches zur Führung des Betätigungselementes (45) für das Stellglied dient. Der am Betätigungselement (45) befestigte Stift (51) erstreckt sich durch die im Stellelement (58) angeordneten Schlitze (49, 66) hindurch in die als Kurvenbahnen (54, 62) dienenden, quer zur Längsachse des rohrförmigen Körpers (68) verlaufenden und wenigstens einen schräg zur Längsachse des rohrförmigen Körpers (68) verlaufenden Bereich aufweisenden Durchgangsöffnungen des rohrförmigen Körpers (68) hinein. In Fig. 2 ist lediglich ein Schlitz (49) und eine Kurvenbahn (54) erkennbar.

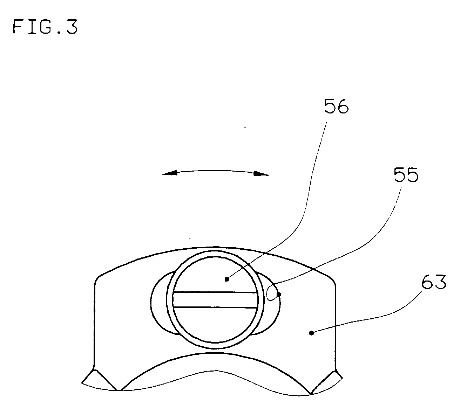

Figur 3 zeigt einen Ausschnitt der dem Gehäuse abgewandten Stirnseite des Flansches (63) der Antriebseinrichtung (II) zum Verstellen des Stellgliedes. Die im Flansch (63) angeordneten Schlitze (55 und 65), von denen in Fig. 3 nur einer dargestellt ist, sind bogenförmig ausgebildet, wobei beide Schlitze (55 und 65) auf demselben Radius um die Längsachse des rohrförmigen Körpers (68) liegen. Durch die Schlitze (55 und 65) sind die als Befestigungselemente (56 und 64) für die Antriebseinrichtung (II) am Gehäuse dienenden Schrauben hindurchgeführt.

Der Lagerbock (68, 63) für das Stellelement (58) kann selbstverständlich auch von einem Teil des Gehäuses (1, 6) gebildet werden. Die im Lagerbock (68, 63) angeordnete Kurvenbahn kann dann direkt in der Wand des Gehäuses (1, 6) angeordnet sein. Der am Betätigungselement (45) angeordnete Stift (51) kann auch von stiftartigen Anformungen am Betätigungselement (45) gebildet werden.

Die Funktion der im Vorstehenden beschriebenen lastabhängig steuerbaren Bremskraftregelventileinrichtung wird nachfolgend näher erläutert.

Es wird angenommen, daß die Bremskraftregelventileinrichtung in der Bremsanlage eines Fahrzeugs angeordnet ist, wobei der Steuereingang (13) der Bremskraftregelventileinrichtung mit dem Ausgang eines Bremsventils, z. B. Motorwagenbremsventils, in Verbindung steht, und der Druckmittelausgang (37) der Bremskraftregelventileinrichtung (I) mit einem Bremsventil verbunden ist, welches einem Bremszylinder der Fahrzeugbremsanlage zugeordnet ist. Die Bremskraftregelventileinrichtung ist am Fahrzeugaufbau angeordnet und das freie Ende des Hebels (59) ist über ein Seil mit der Achse des Fahrzeugs verbunden. Bei nicht beladenem Fahrzeug befinden das Stellglied (39) und die Antriebseinrichtung (II) der Bremskraftregelventileinrichtung (I) sich in der in Fig. 1 gezeigten Stellung.

Bei nichtbetätigter Bremse ist das Einlaßventil (32, 33) der Bremskraftregelventileinrichtung (I) geschlossen und das Auslaßventil (34, 33) der Bremskraftregelventileinrichtung (I) ist geöffnet. Das Einlaßventil (22, 19) des Vorsteuerventils ist geöffnet und das Auslaßventil (21, 19) des Vorsteuerventils ist geschlossen.

Das Einlaßventil (32, 33) der Bremskraftregelventileinrichtung (I) ist geschlossen und das Auslaßventil (33, 34) der Bremskraftregelventileinrichtung (I) ist geöffnet.

Wenn das Motorwagen-Bremsventil betätigt wird, gelangt der von diesem ausgesteuerte Bremssteuerdruck über den Steuereingang (13) in die Druckmitteleingangskammer (12) der Bremskraftregelventileinrichtung (I) und gleichzeitig über die Druckmittelleitung (14) und das geöffnete Einlaßventil (22, 19) des Vorsteuerventils in die Vorsteuerkammer (24), von welcher der Bremssteuerdruck über die Druckmittelleitung (16) (Gehäusekanal) in die Steuerkammer (31) der Bremskraftregelventileinrichtung (I) gelangt.

Bei Erreichen eines bestimmten, auf den Vorsteuerkolben (25) einwirkenden Bremssteuerdruckes, bewegt sich der Vorsteuerkolben (25) gegen die Kraft der Feder (27) in Richtung von der Vorsteuerkammer (24) weg, wodurch das Einlaßventil (22, 19) in seine Schließstellung gelangt.

Gleichzeitig mit den vorstehend beschriebenen Vorgängen wirkt der Bremssteuerdruck in der Steuerkammer (31) der Bremskraftregelventileinrichtung (I) auf den aus dem Kolben (7) und der Membran (3) bestehenden Bremsdruckregelkolben (7, 3), wodurch sich dieser abwärts, in Richtung auf die Druckmittelausgangskammer (35) der Bremskraftregelventileinrichtung (I) zu bewegt. Die Membran (3) löst sich während der Abwärtsbewegung des Kolbens (7) von den im Gehäuse (1, 6) angeordneten Rippen (5) und legt sich im zunehmenden Maße an die Rippen (4) des Kolbens (7) an. Die wirksame Membranfläche wird so laufend vergrößert, bis sie die Fläche der Kolbenoberseite überwiegt. Dabei setzt das Ventilschließglied (33) des kombinierten Einlaß- und Auslaßventils (32, 33, 34) auf die als Auslaßsitz (34) ausgebildete Stirnfläche des Stellgliedes (39) auf, wenn der Bremsdruckregelkolben (7, 3) einen vorbestimmten Weg zurückgelegt hat. Das Auslaßventil (33, 34) ist dann geschlossen. Bei der weiteren Bewegung des Bremsdruckregelkolbens (7, 3) in derselben Richtung hebt das Stellglied (39) das Ventilschließglied (33) vom Einlaßsitz (32) ab. Das Einlaßventil (32, 33) ist dann geöffnet. Von der Eingangskammer (12) gelangt dann der Bremssteuerdruck durch das geöffnete Einlaßventil (32, 33) in die Druckmittelausgangskammer (35) und von dieser weiter durch den Druckmittelausgang (37) zu dem nachgeschalteten Verbraucher (z. B. Bremsventil). Wenn die vom Druck in der Druckmittelausgangskammer (35) auf den Bremsdruckregelkolben (7, 3) ausgeübte Kraft gleich ist der vom Druck in der Steuerkammer (31) und vom Druck in der Druckmitteleingangskammer (12) auf den Bremsdruckregelkolben (7, 3) entgegengerichtet einwirkenden Kraft, bewegt der Bremsdruckregelkolben (7, 3) sich in Richtung auf die Steuerkammer (31) zu. Dabei gelangt das Einlaßventil (32, 33) in seine Schließstellung. Eine Abschlußstellung der Bremskraftregelventileinrichtung (I) ist erreicht.

Soll der Bremsvorgang beendet werden, wird das Motorwagen-Bremsventil in seine entlüftende Stellung gebracht. Der Druck in der Druckmitteleingangskammer (12) der Bremskraftregelventileinrichtung (I) baut sich über das Motorwagen-Bremsventil zur Atmosphäre hin ab. Aufgrund des sich abbauenden Druckes in der Druckmitteleingangskammer (12) der Bremskraftregelventileinrichtung (I) bewegt der Bremsdruckregelkolben (7, 3) sich in Richtung auf die Steuerkammer (31) zu. Dabei gelangt das Auslaßventil (33, 34) der Bremskraftregelventileinrichtung (I) in seine Offenstellung. Über das geöffnete Auslaßventil (33 ,34), den als Stellglied (39) dienenden hohlen Stößel, eine Öffnung in der Wand des Stößels, den Entlüftunsraum (38) und den Druckmittelauslaß (69) wird der Druck in der Druckmittelausgangskammer (35) der Bremskraftregelventileinrichtung (I) und somit auch der Druck im nachgeschalteten Verbraucher (Bremsventil) zur Atmosphäre hin abgebaut.

Bedingt durch den Druckabbau in der Druckmitteleingangskammer (12) gelangt auch das Einlaßventil (22, 19) des Vorsteuerventils in die Offenstellung, so daß dann auch die Steuerkammer (31) der Bremskraftregelventileinrichtung (I) über das geöffnete Einlaßventil (22, 19), die Druckmittelleitung (14), den Steuereingang (13) und das Motorwagen-Bremsventil mit der Atmosphäre verbunden ist.

Wird das Fahrzeug vollständig beladen, verringert sich der Abstand zwischen Fahrzeugaufbau und Fahrzeugachse. Die Bremskraftregelventileinrichtung stellt sich dann auf "Vollast" ein. Dies geschieht in der Weise, daß bei Verringerung des Abstandes zwischen Fahrzeugachse und Fahrzeugaufbau das als rotationssymmetrischer Körper ausgebildete Stellelement (58) von der Drehfeder (44) um seine Längsachse verdreht wird - in diesem Ausführungsbeispsiel im Uhrzeigersinn -. Da der mit dem Betätigungselement (45) verbundene Stift (51) sich an den schräg zur Längsachse des Lagerbockes (68, 63) bzw. des Stellelementes (58) verlaufenden Bereichen der als Steuerkurve dienenden Kurvenbahnen (54 und 62) abstützt, und lediglich in den im Stellelement (58) angeordneten Schlitzen (49 und 66) in Richtung der Längsachse des Stellelementes (58) eine Bewegung ausführen kann, wird er von der Kontur der Kurvenbahnen (54 und 62) in Richtung der Längsachse des Stellelementes (58) auf das Stellglied (39) zu verschoben, wobei er das Betätigungselement (45) in der gleichen Richtung mitnimmt.

Das Betätigungselement (45) der Antriebseinrichtung (II), welches mit dem Stellglied (39) der Bremskraftregelventileinrichtung (I) in Wirkverbindung steht bzw. in Wirkverbindung bringbar ist, verschiebt dabei das Stellglied (39) in Richtung auf das kombinierte Einlaß- und Auslaßventil (32, 33, 34) der Bremskraftregelventileinrichtung (I) zu. Die daraus resultierende Verringerung des Abstandes zwischen der dem kombinierten Ein- und Auslaßventil (32, 33, 34) zugewandten Seite des Stellgliedes (39) und dem kombinierten Einlaß- und Auslaßventil (32, 33, 34) wirkt sich dahingehend aus, daß der den Einlaßsitz (32) und das Ventilschließglied (33) tragende Bremsdruckregelkolben (7, 3) bei einem Bremsvorgang einen kürzeren Weg zurücklegt, bis das Auslaßventil (33, 34) in seine Schließstellung und das Einlaßventil (33, 32) in seine Offenstellung gelangt und somit nur ein Teilbereich der Membran (3) an den Rippen (4) des Kolbens (7) zur Anlage kommt. Die dadurch bewirkte Reduzierung der Wirkfläche (2) des Bremsdruckregelkolbens (7, 3) erfordert einen höheren Druck in der Druckmittelausgangskammer (35) der Bremskraftregelventileinrichtung (I), um den Bremsdruckregelkolben (7, 3) gegen die Kraft des Steuerdruckes in der Steuerkammer (31) und in der Druckmitteleingangskammer (12) wieder in eine Position zu bringen, in welcher das Einlaßventil (32, 33) geschlossen und somit eine Abschlußstellung der Bremskraftregelventileinrichtung (I) erreicht ist. Der von der Bremskraftregelventileinrichtung (I) ausgesteuerte und in das nachgeschaltete Bremsventil eingesteuerte höhere Druck bewirkt dann auch einen vom Bremsventil in die Bremszylinder eingesteuerten höheren Druck.

Wird das Fahrzeug entladen, vergrößert sich der Abstand zwischen Fahrzeugachse und Fahrzeugaufbau. Der Hebel (59) der Bremskraftregelventileinrichtung wird dann mittels des Seils entgegen dem Uhrzeigersinn um die Drehachse des Stellelementes (58) verschwenkt. Bei der dadurch bewirkten Drehbewegung des Stellelementes (58) gegen die Kraft der Drehfeder (44) wird der Stift (51) und somit das Betätigungselement (45) mittels der Kurvenbahn (54 bzw. 62) in Richtung vom Stellglied (39) der Bremskraftregelventileinrichtung (I) weg verschoben. Bei Beaufschlagung des Stellgliedes (39) mit Druckmittel folgt das Stellglied (39) dem Betätigungselement (45). Dabei vergrößert sich der Abstand zwischen dem kombinierten Einlaß- und Auslaßventil (32, 33, 34) der Bremskraftregelventileinrichtung (I) und der diesem zugewandten Stirnseite des Stellgliedes (39).

Ist das freie Ende des Hebels (59) nicht mittels eines Seiles mit der Achse des Fahrzeugs verbunden, sondern direkt an diese angelenkt, kann auf die Drehfeder (44) verzichtet werden, es sei denn, daß die Drehfeder (44) die Aufgabe hat, bei Gestängebruch, das Stellelement (58) in eine definierte Position zu bringen.

Es ist natürlich auch möglich, als Steuerkurve nur eine Kurvenbahn (54) im Lagerbock (68, 63) und als Führung und Verdrehsicherung für das Betätigungselement nur einen Schlitz (49) im Stellelement (58) vorzusehen.

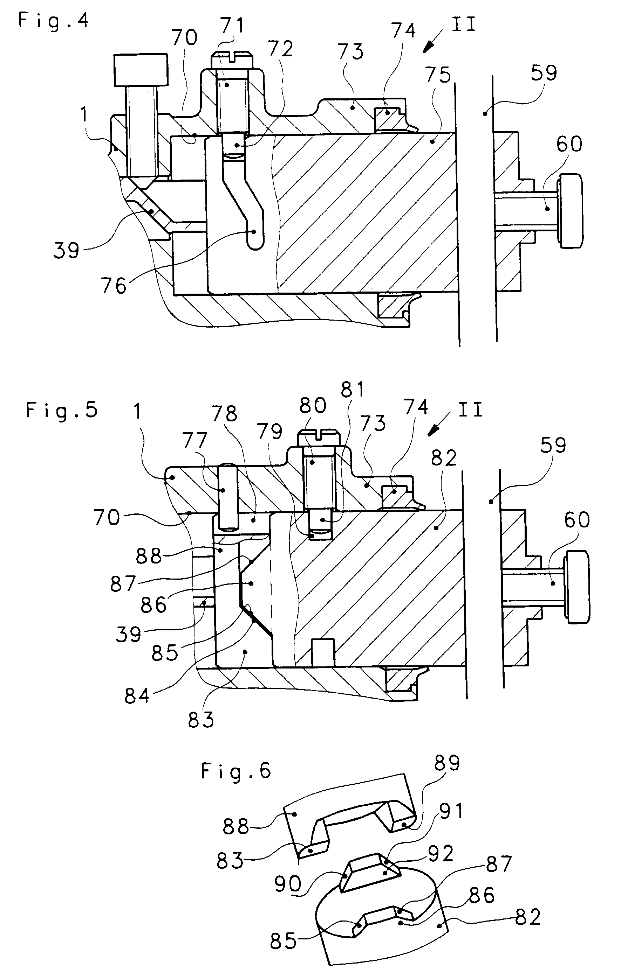

In Fig. 4 ist ein Ausschnitt einer Bremskraftregelventileinrichtung dargestellt, die eine mechanisch betätigte Antriebseinrichtung (II) für das Stellglied der Bremskraftregelventileinrichtung (I) aufweist. Da diese Bremskraftregelventileinrichtung sich nur durch die andersartig ausgebildete Antriebseinrichtung (II) von der Bremskraftregelventileinrichtung gemäß Fig. 1 unterscheidet, wird nachfolgend auch nur die Antriebseinrichtung (II) beschrieben. Der besseren Übersicht halber sind die den in Fig. 1 gezeigten Bauteilen gleichen Bauteile mit gleichen Bezugsziffern versehen.

Das Gehäuse (1, 6) der Bremskraftregelventileinrichtung (I) weist eine in Richtung der Längsachse des Gehäuses (1, 6) verlaufende Öffnung (70) auf, die auf der dem Einlaßventil (32, 33) und dem Auslaßventil (33, 34) gegenüberliegenden Seite des Gehäuses (1, 6) angeordnet ist. In der Öffnung (70) ist gleichachsig zum Stellglied (39) ein als rotationssymmetrischer Körper ausgebildetes Stellelement (75) um seine Längsachse drehbar und in Richtung seiner Längsachse auf das Einlaß- und Auslaßventil (32, 33, 34) zu bzw. von diesem weg bewegbar angeordnet. Das die Öffnung (70) aufweisende Ende des Gehäuses (1, 6) dient somit als Lagerbock (73) für das Stellelement (75). Das Stellelement (75) besitzt auf seinem Umfang eine als Steuerkurve dienende Kurvenbahn (76), die als ein in die Mantelfläche des Stellelementes (75) eingearbeiteter quer zur Längsachse des Stellelementes (75) verlaufender Schlitz ausgebildet ist, welcher wenigstens einen schräg zur Längsachse des Stellelementes (75) verlaufenden Bereich aufweist. Im Lagerbock (73) ist ein zapfenartiges Bauteil (71) um seine Längsachse drehbar angeordnet. Das zapfenartige Bauteil (71) besitzt an seiner dem Stellelement (75) zugewandten Stirnseite ein stiftartiges Bauteil (72), welches exzentrisch am zapfenartigen Bauteil (71) angeordnet ist und sich in die Kurvenbahn (76) hinein erstreckt. Durch Verdrehen des zapfenartigen Bauteiles (71) um seine Längsachse kann das Stellelement (75), je nach Drehrichtung des zapfenartigen Bauteiles (71), in Richtung auf das Stellglied (39) zu bzw. von diesem weg verstellt werden. Es ist natürlich auch möglich, anstelle des zapfenartigen Bauteiles (71) lediglich ein stiftartiges Bauteil direkt am Lagerbock (73) oder auch am Gehäuse (1, 6) anzuordnen, welches in die Kurvenbahn (76) des Stellelementes (75) eingreift. Ein Verstellen des Stellelementes (75) in Richtung der Längsachse des Lagerbockes (73) ist dann jedoch nicht möglich. An dem freien Ende des Lagerbockes (73) ist ein Dichtring (74) angeordnet, der sowohl am Lagerbock (73) als auch an dem Stellelement (75) dichtend anliegt. An dem aus dem Gehäuse (1, 6) herausragenden freien Ende des Stellelementes (75) ist der Hebel (59) befestigt, über welchen das Stellelement (75) mit einem Teil des Fahrzeugs verbunden ist.

Es ist auch möglich, die Kurvenbahn (76) am Gehäuse (1, 6) oder am Lagerbock (73) anzuordnen, wobei die Kurvenbahn (76) dann quer zur Längsachse des Gehäuses (1, 6) bzw. des Lagerbockes (73) verläuft. Das stiftartige Bauteil (72) ist dann auf dem Umfang des Stellelementes (75) angeordnet und erstreckt sich dann mit seinem freien Ende in die am Gehäuse (1, 6) oder am Lagerbock (73) angeordnete Kurvenbahn (76) hinein.

Das mit der Kurvenbahn (76) versehene Stellelement (75) und das am Lagerbock (73) oder am Gehäuse (1, 6) direkt oder indirekt angeordnete stiftartige Bauteil (72) wirken in der Weise zusammen, daß bei einer Drehbewegung des Stellelementes (75) um seine Längsachse je nach Drehrichtung, das Stellelement (75) sich in Richtung auf das Einlaßventil (32, 33) und das Auslaßventil (33, 37) der Bremskraftregelventileinrichtung (I) zu bzw. von diesem weg bewegt.

Wird das Fahrzeug voll beladen, so wird durch die Verringerung des Abstandes zwischen Fahrzeugaufbau und Fahrzeugachse der Hebel (59) z. B. im Uhrzeigersinn verschwenkt, wodurch das Stellelement (75) im Uhrzeigersinn um seine Längsachse gedreht wird. Dadurch, daß die Kontur der Kurvenbahn (76) am stiftartigen Bauteil (72) entlang geführt wird und sich dabei an dem stiftartigen Bauteil (72) abstützt, wird das Stellelement (75) in Richtung auf das Einlaßventil (32, 33) und das Auslaßventil (33, 34) zu gezogen, wenn das stiftartige Bauteil (72) in den schräg zur Längsachse des Stellelementes (75) verlaufenden Bereich der Kurvenbahn (76) gelangt. Da das Stellglied (39) der Bremskraftregelventileinrichtung (I) zwischen dem Einlaß- und Auslaßventil (32, 33, 34) und dem Stellelement (75) angeordnet ist, wird das Stellglied (39) vom Stellelement (75) in Richtung auf das Einlaßventil (32, 33) und das Auslaßventil (33, 34) zu verschoben, wobei sich der Abstand zwischen dem Einlaß- und Auslaßventil (32, 33, 34) und der diesem zugewandten Stirnseite des Stellgliedes (39) verringert. Wird das Fahrzeug entladen, so daß sich der Abstand zwischen dem Fahrzeugaufbau und der Fahrzeugachse vergrößert, wird der Hebel (59) entgegen dem Uhrzeigersinn um die Längsachse des Stellelementes (75) verschwenkt. Dabei wird das Stellelement (75) vom Hebel (59) um seine Längsachse entgegen dem Uhrzeigersinn gedreht. Bedingt durch die Zwangsführung des Stellelementes (75) mittels der Kurvenbahn (76) und dem stiftartigen Bauteil (72) bewegt das Stellelement (75) sich in Richtung vom Einlaß- und Auslaßventil (32, 33, 34) weg. Das Stellglied (39) folgt dem Stellelement (75), sobald wieder Druckmittel in die Druckmittelausgangskammer der Bremskraftregelventileinrichtung (I) gelangt, wie im vorstehenden bereits beschrieben ist.

Es ist auch möglich, das Stellelement (75) im Bereich des stiftartigen Bauteiles (72) nach Art einer Schnecke auszubilden, in deren Gewindegänge das stiftartige Bauteil (72) eingreift. Die Schnecke bildet dann die Kurvenbahn (76).

Fig. 5 zeigt einen Ausschnitt einer Bremskraftregelventileinrichtung, die eine vereinfachte mechanisch betätigte Antriebseinrichtung (II) für das Stellglied der Bremskraftregelventileinrichtung (I) aufweist. Da diese Bremskraftregelventileinrichtung sich nur durch die andersartig ausgebildete Antriebseinrichtung (II) von der Bremskraftregelventileinrichtung gemäß Fig. 1 unterscheidet, wird nachfolgend auch nur die Antriebseinrichtung (II) beschrieben. Der besseren Übersicht halber sind die den in den Fig. 1 und 4 gezeigten Bauteilen gleichen Bauteile mit gleichen Bezugsziffern versehen.

Das Gehäuse (1, 6) der Bremskraftregelventileinrichtung (I) weist eine in Richtung der Längsachse des Gehäuses (1, 6) verlaufende Öffnung (70) auf, die auf der dem Einlaßventil (32, 33) und dem Auslaßventil (33, 34) gegenüberliegenden Seite des Gehäuses (1, 6) angeordnet ist. Der die Öffnung (70) aufweisende Bereich des Gehäuses (1, 6) dient als Lagerbock (73) für ein Stellelement (82). Das Stellelement (82) ist als ein rotationssymmetrischer Körper ausgebildet, der gleichachsig zum Stellglied (39) und um seine Längsachse drehbar in der Öffnung (70) angeordnet ist. Das Stellelement (82) besitzt auf seinem Umfang eine umlaufende nutartige Vertiefung (79), in welche ein stiftartiges Bauteil (81) eingreift. Das stiftartige Bauteil (81) ist exzentrisch an der dem Stellelement (82) zugewandten Stirnseite eines zapfenartigen Bauteiles (80) angeordnet, welches um seine Längsachse verdrehbar im Lagerbock (73) oder im Gehäuse (1, 6) angeordnet ist. Das Stellelement (82) besitzt auf seiner dem Stellglied (39) zugewandten Seite einander gegenüberliegend zwei sich in Richtung auf das Stellglied (39) zu erstreckende Vorsprünge (86 und 92), wobei jeder dieser Vorsprünge (86 und 92) zwei abgeschrägte Flanken (87 und 85) bzw. ageschrägte Flanken (90 und 91) aufweist, die am Stellelement (82) beginnen und in Richtung auf das freie Ende des Vorsprungs (86) bzw. des Vorsprungs (92) zu abfallen. Jeder dieser Vorsprünge (86 bzw. 92) dient als eine erste Steuerkurve (86, 87, 85) bzw. Steuerkurve (92, 91, 90) des Stellelementes (82). Zwischen dem Stellglied (39) und der die erste Steuerkurve (86, 87, 85) bzw. Steuerkurve (92, 91, 90) aufweisenden Seite des Stellelementes (82) ist in der Öffnung (70) ein als ein rotations-symmetrischer Körper ausgebildetes Gleitstück, welches als Betätigungselement (88) für das Stellglied (39) dient, gleichachsig zum Stellglied (39) und in Richtung der Längsachse der Öffnung (70) bewegbar angeordnet. Das Betätigungselement (88) besitzt auf seiner der ersten Steuerkurve (86, 87, 85) bzw. Steuerkurve (92, 91, 90) zugewandten Seite einander gegenüberliegend zwei sich in Richtung auf das Stellelement (82) zu erstrekkende als zweite Steuerkurve (83, 84) bzw. Steuerkurve (89) dienende Vorsprünge (83 und 89), wobei jeder dieser Vorsprünge zwei abgeschrägte Flanken (84) aufweist. Jede der abgeschrägten Flanken (84) der Vorsprünge (83 und 89) verläuft parallel zu der korrespondierenden abgeschrägten Flanke (85 bzw. 87 bzw. 90 bzw. 91) der Vorsprünge (86 bzw. 92) des Stellelementes (82). Das Betätigungselement (88) weist in seiner äußeren Mantelfläche eine in Richtung der Längsachse des Betätigungselementes (88) verlaufende nutartige Vertiefung (78) auf, in welche sich ein stiftartiges Bauteil (77) hinein erstreckt, welches am Lagerbock (73) oder am Gehäuse (1, 6) angeordnet ist. Das stiftartige Bauteil (77) und die nutartige Vertiefung (78) dienen als Verdrehsicherung (77, 78) für das Betätigungselement (88), mittels welchem ein Verdrehen des Betätigungselement (88) um seine Längsachse verhindert wird.

Die Steigung der abgeschrägten Flanken (85, 87, 90, 91) der Vorsprünge (86, 92) des Stellelementes (82) und die Steigung der korrespondierenden abgeschrägten Flanken (84) der Vorsprünge (83, 89) des Betätigungselementes (88) sind so gewählt und das Betätigungselement (88) ist so zum Stellelement (82) angeordnet, daß bei einer Drehbewegung des Stellelementes (82) um seine Längsachse die abgeschrägten Flanken (85, 87, 90, 91) der Vorsprünge (86, 92) des Stellelementes (82) und die abgeschrägten Flanken (84) der Vorsprünge (83, 89) des Betätigungselementes (88) aufeinander gleiten, wobei das Betätigungselement (88) vom Stellelement (82) in Richtung auf das Einlaß- und Auslaßventil (32, 33, 34) zu verschoben wird.

Wird das Stellelement (82) entgegen dem Uhrzeigersinn um seine Längsachse gedreht, so wird das Betätigungselement (88) in Richtung auf das Einlaß- und Auslaßventil (32, 33, 34) der Bremskraftregelventileinrichtung (I) zu verschoben, wobei es das Stellglied (39) in der gleichen Richtung verschiebt. Dabei verringert sich der Abstand zwischen dem Einlaß- und Auslaßventil (32, 33, 34) der Bremskraftregelventileinrichtung (I) und der diesem zugewandten Seite des Stellgliedes (39), welches wie auch beim Ausführungsbeispiel gemäß Fig. 5, zwischen dem Einlaß- und Auslaßventil (32 ,33, 34) der Bremskraftregelventileinrichtung (I) und dem Betätigungselement (88) bzw. dem Stellelement (82) in Richtung der Längsachse des Gehäuses (1, 6) der Bremskraftregelventileinrichtung (I) bewegbar angeordnet ist.

Bei einer Drehbewegung des Stellelementes (82) im Uhrzeigersinn löst sich die erste Steuerkurve (86, 87, 85, 92, 91, 90) des Stellelementes (82) von der zweiten Steuerkurve (88, 83, 89, 84) des Betätigungselementes (88). Wird das Stellglied (39) bei Druckbeaufschlagung mit dem Druck der Druckmittelausgangskammer der Bremskraftregelventileinrichtung in Richtung auf das Stellelement (82) zu verschoben, nimmt es das Betätigungselement (88) in der gleichen Richtung mit, wobei dann die Steuerkurve (86, 87, 85, 92, 91, 90) des Stellelementes (82) und die Steuerkurve (83, 89, 84) des Betätigungselementes (88) wieder aneinander zur Anlage kommen.

In Fig. 6 sind der die erste Steuerkurve (86, 85, 87, 92, 91, 90) aufweisende Bereich des Stellelementes (82) und das Betätigungselement (88) mit der zweiten Steuerkurve (83, 89, 124) perspektivisch dargestellt.

Wird auf eine Verstellbarkeit des Stellelementes (82) in axialer Richtung verzichtet, kann, wie auch beim Ausführungsbeispiel gemäß Fig. 5, das stiftartige Bauteil (81) direkt am Lagerbock (73) oder am Gehäuse (1, 6) angeordnet werden.

Beim Ausführungsbeispiel gemäß Fig. 5 kann das stiftartige Bauteil (77) der Verdrehsicherung (77, 78) für das Betätigungselement (88) exzentrisch an einem zapfenartigen Bauteil angeordnet sein, wobei dann dieses zapfenartige Bauteil am Lagerbock (73) oder am Gehäuse (1, 6) um seine Längsachse drehbar angeordnet ist. Mittels des stiftartigen Bauteiles (77) und zwei mit diesem zusammenwirkenden, am Betätigungselement (88) angeordneten Anschlägen ist dann das Betätigungselement (88) in Richtung auf das Einlaß- und Auslaßventil (32, 33, 34 ) zu bzw. von diesem weg verstellbar. Das mit dem Stellelement (82) zusammenwirkende stiftartige Bauteil (81) wird dann nicht an einem zapfenartigen Bauteil sondern direkt am Lagerbock (73) bzw. am Gehäuse (1, 6) angeordnet, so daß das Stellelement (82) in Richtung seiner Längsachse fixiert ist. Das Gleitstück dient als Betätigungselement (88) für das Stellglied (39) und hat somit dieselbe Funktion wie das Betätigungselement (45) der Bremskraftregelventileinrichtung gemäß Fig. 1.

Bei allen beschriebenen Antriebseinrichtungen (II), die eine oder mehrere Steuerkurven aufweisen, ist es von Bedeutung, daß die Steuerkurve bzw. die Steuerkurven wenigstens einen schräg zur Längsachse des Stellelementes (58, 75, 82) bzw. des Lagerbockes (68, 63, 73) bzw. des als Betätigungselement (88) dienenden Gleitstückes verlaufenden Bereich aufweisen, so daß bei einer Drehbewegung des Stellelementes (58, 75, 82) um seine Längsachse das Betätigungselement (88) bzw. das Stellelement (75) oder gemäß Fig. 1 das Betätigungselement (45) in Richtung seiner Längsachse verschoben wird, und zwar in Richtung auf das Einlaßventil (32, 33) und das Auslaßventil (33, 34) der Bremskraftregelventileinrichtung (I) zu.

Von besonderer Bedeutung für die Erfindung ist es, daß das Stellelement (58, 75, 82) und gegebenenfalls das Betätigungselement (45) bzw. das als Betätigungselement (88) dienende Gleitstück gleichachsig oder wenigstens annähernd gleichachsig zum Stellglied (39) angeordnet sind und daß das Stellelement (75) oder das mit dem Stellelement (58, 82) und dem Stellglied (39) zusammenwirkende Betätigungselement (45, 88) in Richtung der Längsachse des Stellgliedes (39) bewegt wird. Durch diese Ausbildung der Antriebseinrichtung (II) und durch diese Anordnung der Antriebseinrichtung (II) zum Stellglied (39) wird erreicht, daß die Drehbewegung des Stellelementes (58, 75, 82) nicht direkt am Stellglied (39) in eine geradlinige Bewegung des Stellgliedes (39) umgesetzt wird, sondern im Bereich der Antriebseinrichtung, so daß auf das Stellglied (39) einwirkende Querkräfte weitestgehend vermieden werden.

Die beschriebene Bremskraftregelventileinrichtung ist nach dem Baukastenprinzip aufgebaut, so daß die unterschiedlichen Antriebseinrichtungen für das Stellglied in der im Gehäuse vorhandenen Öffnung angeordnet werden können, ohne größere Änderungen am Gehäuse der Bremskraftregelventileinrichtung vornehmen zu müssen.

## Patentansprüche

1. Lastabhängig steuerbare Bremskraftregelventileinrichtung für eine druckmittelbetätigte Fahrzeugbremsanlage, mit folgenden Merkmalen:
a) die Bremskraftregelventileinrichtung (I) besitzt ein in einem Gehäuse (1, 6) angeordnetes Einlaßventil (32, 33) und Auslaßventil (33, 34);
b) zur Betätigung des Einlaßventils (32, 33) und des Auslaßventils (33, 34) der Bremskraftregelventileinrichtung (I) dient ein im Gehäuse (1, 6) angeordneter Bremsdruckregelkolben (7, 3);
c) die Regelgröße der Bremskraftregelventileinrichtung (I) von Leerlast bis Vollast ist mittels eines im Gehäuse (1, 6) angeordneten lastabhängig verstellbaren Stellgliedes (39) einstellbar;
d) zum lastabhängigen Verstellen des Stellgliedes (39) dient eine mechanische Antriebseinrichtung (II);
dadurch gekennzeichnet,
daß die Antriebseinrichtung (II) ein um seine Längsachse drehbares Stellelement (58, 75, 82) aufweist, welches zur Betätigung des Stellgliedes (39) direkt oder über ein in Richtung seiner Längsachse bewegbares und mit dem Stellelement (58, 75, 82) in Wirkverbindung stehendes bzw. in Wirkverbindung bringbares Betätigungselement (45, 88) mit dem Stellglied (39) in Wirkverbindung steht bzw. in Wirkverbindung bringbar ist, wobei das Betätigungselement (45, 88) und das Stellelement (58, 75, 82) bzw. das Stellelement (58, 75, 82) wenigstens annähernd gleichachsig zum Stellglied (39) angeordnet sind bzw. ist und das Stellelement 58, 75, 82) oder das Betätigungselement (45, 88) bei einer Drehbewegung des Stellelementes (58, 75, 82) um seine Längsachse zum Verstellen des Stellgliedes (39) in Richtung der Längsachse des Stellgliedes (39) bewegbar ist.

2. Lastabhängig steuerbare Bremskraftregelventileinrichtung nach Anspruch 1, dadurch gekennzeichnet, daß der Bremsdruckregelkolben (7, 3), das Einlaß-und Auslaßventil (32, 33, 34), das Stellglied (39) und die Antriebseinrichtung (II) in Richtung der Längsachse der Bremskraftregelventileinrichtung (I) in Reihe hintereinanderliegend angeordnet sind.

3. Lastabhängig steuerbare Bremskraftregelventileinrichtung nach wenigstens einem der vorhergehenden Ansprüche, gekennzeichnet durch die folgenden Merkmale:
a) die Antriebseinrichtung (II) für das Stellglied (39) besitzt einen Lagerbock (68, 63), welcher an der dem Einlaßventil (32, 33) und dem Auslaßventil (33, 34) gegenüberliegenden Seite des Gehäuses (1, 6) der Bremskraftregelventileinrichtung (I) angeordnet ist;
b) der Lagerbock (68, 63) besitzt eine in Richtung der Längsachse des Stellgliedes (39) verlaufende Öffnung (93), in welcher das Stellelement (58) um seine Längsachse drehbar angeordnet ist;
c) das Stellelement (58) weist eine in Richtung seiner Längsachse verlaufende Ausnehmung (50) auf, in welcher ein stößelartiges Betätigungselement (45) für das Stellglied (39) in Richtung der Längsachse des Stellelementes (58) bewegbar angeordnet ist;
d) das Stellglied (39) ist zwischen dem Einlaß- und Auslaßventil (32, 33, 34) und dem Betätigungselement (45) angeordnet;
e) am Betätigungselement (45) ist quer zur Längsachse des Betätigungselementes (45) verlaufend ein sich vom Betätigungselement (45) weg erstreckender Stift (51) angeordnet, der sich durch eine im Stellelement (58) angeordnete Führung (49, 66), welche in Richtung der Längsachse des Stellelements (58) verläuft, hindurch in eine im Lagerbock (68, 63) angeordnete Kurvenbahn (54, 62) hineinerstreckt, wobei das Stellelement (58), das Betätigungselement (45) mit Stift (51) und die Kurvenbahn (54, 62) in der Weise zusammenwirken, daß bei einer Drehbewegung des Stellelements (58) um seine Längsachse, je nach Drehrichtung, das stößelartige Betätigungselement (45) in Richtung auf das Einlaßventil (32, 33) und das Auslaßventil (33, 34) der Bremskraftregelventileinrichtung (I) zu bzw. von diesem weg verschoben wird;
f) das Betätigungselement (45) und das Stellglied (39) sind so zueinander angeordnet, daß das Stellglied (39) bei einer Bewegung des Betätigungselementes (45) in Richtung auf das Einlaßventil (32, 33) und das Auslaßventil (33, 34) zu vom Betätigungselement (45) in Richtung auf das Einlaßventil (32, 33) und das Auslaßventil (33, 34) zu verschiebbar ist.

4. Lastabhängig steuerbare Bremskraftregelventileinrichtung, nach Anspruch.3, gekennzeichnet durch die folgenden Merkmale:
a) die Führung (49, 66) für den am stößelartigen Betätigungselement (45) angeordneten Stift (51) wird von einem im Stellelement (58) angeordneten Schlitz gebildet;
b) die im Lagerbock (68, 63) angeordnete Kurvenbahn (54, 62) wird von einem im wesentlichen quer zur Längsachse des Lagerbockes (68, 63) verlaufenden Schlitz im Lagerbock (68, 63) gebildet.

5. Lastabhängig steuerbare Bremskraftregelventileinrichtung nach wenigstens einem der vorhergehenden Ansprüche 1 oder 2, gekennzeichnet durch die folgenden Merkmale:
a) die Antriebseinrichtung (II) für das lastabhängig verstellbare Stellglied (39) besitzt einen Lagerbock, welcher an der dem Einlaßventil (32, 33) und dem Auslaßventil (33, 34) der Bremskraftregelventileinrichtung (I) gegenüberliegenden Seite des Gehäuses (1, 6) der Bremskraftregelventileinrichtung (I) angeordnet ist;
b) der Lagerbock (68, 63) besitzt eine in Richtung der Längsachse des Stellgliedes (39) verlaufende Öffnung (93), in welcher das Stellelement (58) um seine Längsachse drehbar angeordnet ist;
c) das Stellelement (58) weist eine in Richtung seiner Längsachse verlaufende Ausnehmung (50) auf, in welcher ein stößelartiges Betätigungselement (45) für das Stellglied (39) in Richtung der Längsachse des Stellelementes (58) bewegbar angeordnet ist;
d) das Stellglied (39) ist zwischen dem Einlaß- und Auslaßventil (32, 33, 34) und dem Betätigungselement (45) angeordnet;
e) am Betätigungselement (45) ist ein quer zur Längsachse des Betätigungselementes (45) verlaufender und sich von diesem weg erstreckender Stift (51) angeordnet, der sich durch eine im Stellelement (58) angeordnete Kurvenbahn, welche quer zur Längsachse des Stellelementes (58) verlaufend am Stellelement (58) angeordnet ist, hindurch in eine im Lagerbock (68, 63) angeordnete, in Richtung der Längsachse des Lagerbockes (68, 63) verlaufende Führung hineinerstreckt, wobei das Stellelement (58), das stößelartige Betätigungselement (45) mit Stift (51) und die Kurvenbahn in der Weise zusammenwirken, daß bei einer Drehbewegung des Stellelementes (58) um seine Längsachse, je nach Drehrichtung, das stößelartige Betätigungselement (45) für das Stellglied (39) in Richtung auf das Einlaßventil (32, 33) und das Auslaßventil (33, 34) der Bremskraftregelventileinrichtung (I) zu bzw. von diesem weg verschoben wird;
f) das Betätigungselement (45) und das Stellglied (39) sind so zueinander angeordnet, daß das Stellglied (39) bei einer Bewegung des Betätigungselementes (45) in Richtung auf das Einlaßventil (32, 33) und das Auslaßventil (33, 34) zu vom Betätigungselement (45) in Richtung auf das Einlaßventil (32, 33) und das Auslaßventil (33, 34) zu verschiebbar ist.

6. Lastabhängig steuerbare Bremskraftregelventileinrichtung nach Anspruch 5, gekennzeichnet durch die folgenden Merkmale:
a) die Führung für den am stößelartigen Betätigungselement (45) angeordneten Stift (51) wird von einem im Lagerbock (68, 63) angeordneten Schlitz gebildet;
b) die im Stellelement (58) angeordnete Kurvenbahn wird von einem im wesentlichen quer zur Längsachse des Stellelementes (58) verlaufenden Schlitz im Stellelement (58) gebildet.

7. Lastabhängig steuerbare Bremskraftregelventileinrichtung nach wenigstens einem der vorhergehenden Ansprüche, dadurch gekennzeichnet, daß im oder am Gehäuse (1, 6) der Bremskraftregelventileinrichtung ein Vorsteuerventil zum Beeinflussen des Druckaufbaus in der Steuerkammer (31) der Bremskraftregelventileinrichtung (I) angeordnet ist.

8. Lastabhängig steuerbare Bremskraftregelventileinrichtung nach wenigstens einem der vorhergehenden Ansprüche 1, 2 oder 7, gekennzeichnet durch die folgenden Merkmale:
a) die Antriebseinrichtung (II) für das lastabhängig verstellbare Stellglied (39) besitzt einen Lagerbock (73), welcher an der dem Einlaßventil (32, 33) und dem Auslaßventil (33, 34) der Bremskraftregelventileinrichtung (I) gegenüberliegenden Seite des Gehäuses (1, 6) der Bremskraftregelventileinrichtung angeordnet ist;
b) der Lagerbock (73) besitzt eine in Richtung der Längsachse des Stellgliedes (39) verlaufende Öffnung (70), in welcher das Stellelement (75) um seine Längsachse drehbar und in Richtung der Längsachse des Lagerbockes (73) bewegbar angeordnet ist;
c) das Stellelement (75) besitzt eine quer zu seiner Längsachse verlaufende Kurvenbahn (76), in welche sich ein am Gehäuse (1, 6) oder am Lagerbock (73) angeordnetes stiftartiges Bauteil (72) hineinerstreckt;
d) das Stellglied (39) ist zwischen dem Einlaß- und Auslaßventil (32, 33, 34) und dem Stellelement (75) angeordnet;
e) das stiftartige Bauteil (72) und das Stellelement (75) mit Kurvenbahn (76) wirken in der Weise zusammen, daß b.ei einer Drehbewegung des Stellelementes (75) um seine Längsachse, je nach Drehrichtung, das Stellelement (75) mittels der Kurvenbahn (76) und des stiftartigen Bauteiles (72) in Richtung. auf das Einlaßventil (32, 33) und das Auslaßventil (33, 34) der Bremskraftregelventileinrichtung (I) zu bzw. von diesem weg bewegt wird;
f) das Stellelement (75) und das Stellglied (39) sind so zueinander angeordnet, daß das Stellglied (39) bei einer Bewegung des Stellelementes (75) in Richtung auf das Einlaßventil (32, 33) und das Auslaßventil (33, 34) zu vom Stellelement (75) in Richtung auf das Einlaßventil (32, 33) und das Auslaßventil (33, 34) zu verschiebbar ist.

9. Lastabhängig steuerbare Bremskraftregelventileinrichtung nach wenigstens einem der vorhergehenden Ansprüche 1, 2 oder 7, gekennzeichnet durch die folgenden Merkmale:
a) die Antriebseinrichtung (II) für das lastabhängig verstellbare Stellglied (39) besitzt einen Lagerbock (73), welcher an der dem Einlaßventil (32, 33) und dem Auslaßventil (33, 34) der Bremskraftregelventileinrichtung (I) gegenüberliegenden Seite des Gehäuses (1, 6) der Bremskraftregelventileinrichtung (I) angeordnet ist;
b) der Lagerbock (73) besitzt eine in Richtung der Längsachse des Stellgliedes (39) verlaufende Öffnung (70), in welcher das Stellelement (75) um seine Längsachse drehbar und in Richtung der Längsachse des Lagerbockes (73) bewegbar angeordnet ist;
c) am Lagerbock (73) oder am Gehäuse (1, 6) ist eine quer zur Längsachse des Lagerbockes (73) bzw. Gehäuses (1, 6) verlaufende Kurvenbahn angeordnet, in welche sich ein am Stellelement (75) angeordnetes stiftartiges Bauteil hineinerstreckt;
d) das Stellglied (39) ist zwischen dem Einlaß- und Auslaßventil (32, 33, 34) und dem Stellelement (75) angeordnet;
e) die Kurvenbahn und das Stellelement (75) mit dem stiftartigen Bauteil wirken in der Weise zusammen, daß bei einer Drehbewegung des Stellelementes (75) um seine Längsachse, je nach Drehrichtung, das Stellelement (75) mittels der Kurvenbahn und des Stiftes in Richtung auf das Einlaßventil (32, 33) und das Auslaßventil (33, 34) der Bremskraftregelventileinrichtung (I) zu bzw. von diesem weg verschoben wird;
f) das Stellelement (75) und das Stellglied (39) sind so zueinander angeordnet, daß das Stellglied (39) bei einer Bewegung des Stellelementes (75) in Richtung auf das Einlaßventil (32, 33) und das Auslaßventil (33, 34) zu vom Stellelement (75) in Richtung auf das Einlaßventil (32, 33) und das Auslaßventil (33, 34) zu verschiebbar ist.

10. Lastabhängig steuerbare Bremskraftregelventileinrichtung nach Anspruch 8, dadurch gekennzeichnet, daß das stiftartige Bauteil (72) exzentrisch an einem zapfenartigen Bauteil (71) angeordnet ist, und daß das zapfenartige Bauteil (71) um seine Längsachse drehbar so am Gehäuse (1, 6) oder am Lagerbock (73) angeordnet ist, daß durch Drehen des zapfenartigen Bauteiles (71) um seine Längsachse, je nach Drehrichtung, das Stellelement (75) in Richtung auf das Einlaßventil (32, 33) und das Auslaßventil (33, 34) zu bzw. von diesem weg verstellbar ist.

11. Lastabhängig steuerbare Bremskraftregelventileinrichtung nach wenigstens einem der vorhergehenden Ansprüche 1, 2 oder 7, gekennzeichnet durch die folgenden Merkmale:
a) die Antriebseinrichtung (II) für das lastabhängig verstellbare Stellglied (39) besitzt einen Lagerbock (73), welcher an der dem Einlaßventil (32, 33) und dem Auslaßventil (33, 34) der Bremskraftregelventileinrichtung (I) gegenüberliegenden Seite des Gehäuses (1, 6) der Bremskraftregelventileinrichtung (I) angeordnet ist;
b) der Lagerbock (73) besitzt eine in Richtung der Längsachse des Stellgliedes (39) verlaufende Öffnung (70), in welcher das Stellelement (82) um seine Längsachse drehbar angeordnet ist;
c) das Stellelement (82) besitzt an seiner dem Stellglied (39) zugewandten Seite wenigstens eine erste Steuerkurve (86, 87, 85, 92, 91, 90);
d) zwischen dem Stellglied (39) und der die erste Steuerkurve (86, 89, 85, 92, 91, 90) aufweisenden Seite des Stellelementes (82) ist in der Öffnung (70) das Betätigungselement (88)in Richtung der Längsachse der Öffnung (70) bewegbar angeordnet;
e) das Betätigungselement (88) besitzt auf seiner der ersten Steuerkurve (86, 87, 85, 92, 91, 90) zugewandten Seite eine zweite Steuerkurve (83, 84, 89,), wobei die erste Steuerkurve (86, 87, 85, 92, 91, 90) und die zweite Steuerkurve (83, 84, 89) so ausgebildet sind, daß sie aneinander zur Anlage bringbar sind;
f) das Betätigungselement (88) ist mittels einer Verdrehsicherung (77, 78) gegen Verdrehen um seine Längsachse gesichert;
g) das Stellelement (82) ist mittels Sicherungsmitteln (79, 80, 81) gegen eine unbeabsichtigte Bewegung in Richtung der Längsachse der Öffnung (70) gesichert;
h) das Stellelement (82) mit erster Steuerkurve (86, 87, 85, 92, 91, 90) und das Betätigungselement (88) mit zweiter Steuerkurve (83, 84, 89) sind so zueinander angeordnet und wirken in der Weise zusammen, daß bei einer Drehbewegung des Stellelementes (82) um seine Längsachse das Betätigungselement (88) vom Stellelement (82) in Richtung auf das Einlaßventil (32, 33) und das Auslaßventil (33, 34) zu verschoben wird;
i) das Stellglied (39) ist zwischen dem Einlaß- und Auslaßventil (32, 33, 34) und dem Betätigungselement (88) angeordnet;
k) das Stellelement (82) und das Betätigungselement (88) sind so zum Stellglied (39) angeordnet, daß bei einer Drehbewegung des Stellelementes (82) um seine Längsachse und einer dadurch bewirkten Bewegung des Betätigungselementes (88) in Richtung auf das Einlaßventil (32, 33 ) und das Auslaßventil (33, 34) zu das Stellglied (39) vom Betätigungselement (88) und indirekt von dem Stellelement (82) in Richtung auf das Einlaßventil (32, 33) und das Auslaßventil (33, 34) zu verschiebbar ist.

12. Lastabhängig steuerbare Bremskraftregelventileinrichtung nach Anspruch 11, dadurch gekennzeichnet, daß die Sicherungsmittel (79, 80, 81) für das Stellelement (82) von einer Umfangsnut (79) im Stellelement (82) und einem stiftartigen Bauteil (81), welches direkt oder indirekt am Lagerbock (73) oder am Gehäuse (1, 6) angeordnet ist und sich in die Umfangsnut (79) hineinerstreckt, gebildet werden.

13. Lastabhängig steuerbare Bremskraftregelventileinrichtung nach Anspruch 12, dadurch gekennzeichnet, daß das stiftartige Bauteil (81) exzentrisch an einem zapfenartigen Bauteil (80) angeordnet ist, und daß das zapfenartige Bauteil (80) um seine Längsachse drehbar so am Lagerbock (73) oder am Gehäuse (1, 6) angeordnet ist, daß durch Drehen des zapfenartigen Bauteiles (80) um seine Längsachse, je nach Drehrichtung, das Stellelement (82) in Richtung auf das Einlaßventil (32, 33) und das Auslaßventil (33, 34) zu bzw. von diesem weg verstellbar ist.

14. Lastabhängig steuerbare Bremskraftregelventileinrichtung nach Anspruch 11, dadurch gekennzeichnet, daß die Verdrehsicherung (77, 78) für das Betätigungselement (88) von einer in das Betätigungselement (88) eingearbeiteten, in Richtung der Längsachse des Betätigungselementes (88) verlaufenden Nut (78) und einem stiftartigen Bauteil (77), welches am Lagerbock (73) oder am Gehäuse (1, 6) angeordnet ist, und sich in die Nut (78) hineinerstreckt, gebildet wird.

15. Lastabhängig steuerbare Bremskraftregelventileinrichtung nach wenigstens einem der vorhergehenden Ansprüche 3, 4, 5, 6, 8, 9, 10, 11, 12, 13 oder 14, dadurch gekennzeichnet, daß der Lagerbock zur Aufnahme des Stellelementes (58, 75, 82) von dem die Öffnung (42, 70) aufweisenden Bereich des Gehäuses (1, 6) gebildet wird.

16. Lastabhängig steuerbare Bremskraftregelventileinrichtung nach Anspruch 14, dadurch gekennzeichnet, daß das stiftartige Bauteil (77) an einem zapfenartigen Bauteil exzentrisch angeordnet ist und daß das zapfenartige Bauteil um seine Längsachse drehbar am Lagerbock (73) oder am Gehäuse (1, 6) so angeordnet ist, daß durch Drehen des zapfenartigen Bauteiles um seine Längsachse, je nach Drehrichtung, das Betätigungselement (88) mittels des an Anschlägen des Betätigungselementes (88) angreifenden stiftartigen Bauteiles (77) in Richtung auf das Einlaßventil (32, 33) und das Auslaßventil (33, 34) zu bzw. von diesem weg verstellbar ist.

## Claims

1. Brake-pressure control-valve device, controllable in dependence upon load, for a pressure-medium-operated vehicle brake unit, which device has the following features:
a) the brake-pressure control-valve device (I) has an inlet valve (32, 33) and outlet valve (33, 34) arranged in a housing (1, 6);
b) a brake-pressure control piston (7,3) arranged in the housing (1, 6) is used to operate the inlet valve (32, 33) and the outlet valve (33, 34) of the brake-pressure control-valve device (I);
c) the control variable of the brake-pressure control-valve device (I) from empty load to full load is settable by means of a control member (39) which is arranged in the housing (1, 6) and is displaceable in dependence upon load;
d) a mechanical drive means (II) is used for the load-dependent displacement of the control member (39);
characterised in that,
the drive means (II) has a control element (58, 75, 82) which is rotatable about its longitudinal axis and which, for operation of the control member (39), is in, or can be brought into, operative connection with the control member (39) directly, or by way of an actuating element (45, 88) that is movable in the direction of its longitudinal axis and that is in, or can be brought into, operative connection with the control element (58, 75, 82), wherein the actuating element (45, 88) and the control element (58, 75, 82), or the control element (58, 75, 82), as the case may be, are or is arranged at least approximately equiaxially with the control member (39), and on rotation of the the control element (58, 75, 82) about its lontidudinal axis, the control element (58, 75, 82) or the actuating element (45, 88) is movable in the direction of the longitudinal axis of the control member (39) for the purpose of displacing the control member (39).

2. Brake-pressure control-valve device, controllable in dependence upon load, according to claim 1, characterised in that the brake-pressure control piston (7, 3), the inlet and outlet valve (32, 33, 34), the control member (39) and the drive means (II) are arranged in series one after another in the direction of the longitudinal axis of the brake-pressure control-valve device (I).

3. Brake-pressure control-valve device, controllable in dependence upon load, according to at least one of the preceding claims, characterised by the following features:
a) the drive means (II) for the control member (39) has a bearing block (68, 63), which is arranged at the side of the housing (1, 6) of the brake-pressure control-valve device (I) opposite to the inlet valve (32, 33) and the outlet valve (33, 34);
b) the bearing block (68, 63) has an aperture (93) extending in the direction of the longitudinal axis of the control member (39), in which aperture the control element (58) is arranged to be rotatable about its longitudinal axis;
c) the control element (58) has a recess (50) extending in the direction of its longitudinal axis, in which recess a ram-like actuating element (45) for the control member (39) is arranged to be movable in the direction of the longitudinal axis of the control element (58);
d) the control member (39) is arranged between the inlet and outlet valves (32, 33, 34) and the actuating element (45);
e) arranged on the actuating element (45), extending transversely to the longitudinal axis of the actuating element (45), is a pin (51) which extends away from the actuating element (45), through a guide (49, 66) arranged in the control element (58) [the guide extending in the direction of the longutidunal axis of the control element (58)] and into a curved track (54, 62) arranged in the bearing block (68, 63), the control element (58), the actuating element (45) with pin (51), and the curved track (54, 62) so acting together that, on rotation of the control element (58) about its longitudinal axis, the ram-like actuating element (45) is displaced towards or away from the inlet valve (32, 33) and the outlet valve (33, 34) of the brake-pressure control-valve device (I), depending on the direction of rotation;
f) the actuating element (45) and the control member (39) are so arranged in relation to each other that, when the actuating element (45) moves towards the inlet valve (32, 33) and the outlet valve (33, 34), the control member (39) is displaceable by the actuating element (45) towards the inlet valve (32, 33) and the outlet valve (33, 34).

4. Brake-pressure control-valve device, controllable in dependence upon load, according to claim 3, characterised by the following features:
a) the guide (49, 66) for the pin (51) arranged on the ram-like actuating element (45) is formed by a slot arranged in the control element (58);
b) the curved track (54, 62) arranged in the bearing block (68, 63) is formed by a slot in the bearing block (68, 63), the slot extending substantially transversely to the longitudinal axis of the bearing block (68, 63).

5. Brake-pressure control-valve device, controllable in dependence upon load, according to at least one of the preceding claims 1 and 2, characterised by the following features:
a) the drive means (II) for the control member (39) displaceable in dependence upon load has a bearing block that is arranged at the side of the housing (1, 6) of the brake-pressure control-valve device (I) opposite to the inlet valve (32, 33) and the outlet valve (33, 34) of the brake-pressure control-valve device (I);
b) the bearing block (68, 63) has an aperture (93) extending in the direction of the longitudinal axis of the control member (39), in which aperture the control element (58) is arranged to be rotatable about its longitudinal axis;
c) the control element (58) has a recess (50) extending in the direction of its longitudinal axis, in which recess a ram-like actuating element (45) for the control member (39) is arranged to be movable in the direction of the longitudinal axis of the control element (58);
d) the control member (39) is arranged between the inlet and outlet valves (32, 33, 34) and the actuating element (45);
e) arranged on the actuating element (45), extending transversely to the longitudinal axis of the actuating element (45) and away from that element, is a pin (51) which extends through a curved track arranged in the control element (58) [the curved track being arranged on the control element (58) and extending transversely to the longitudinal axis of the control element (58)1 and into a guide that is arranged in the bearing block (68, 63) and that extends in the direction of the longitudinal axis of the bearing block (68, 63), the control element (58), the ram-like actuating element (45) with pin (51), and the curved track so acting together that, on rotation of the control element (58) about its longitudinal axis, the ram-like actuating element (45) for the control member (39) is displaced towards or away from the inlet valve (32, 33) and the outlet valve (33, 34) of the brake-pressure control-valve device (I), depending on the direction of rotation;
f) the actuating element (45) and the control member (39) are so arranged in relation to each other that, when the actuating element (45) moves towards the inlet valve (32, 33) and the outlet valve (33, 34), the control member (39) is displaceable by the actuating element (45) towards the inlet valve (32, 33) and the outlet valve (33, 34).

6. Brake-pressure control-valve device, controllable in dependence upon load, according to claim 5, characterised by the following features:
a) the guide for the pin (51) arranged on the ram-like actuating element (45) is formed by a slot arranged in the bearing block (68, 63);
b) the curved track arranged in the control element (58) is formed by a slot in the control element (58), the slot extending substantially transversely to the longitudinal axis of the control element (58).

7. Brake-pressure control-valve device, controllable in dependence upon load, according to at least one of the preceding claims, characterised in that there is arranged in or on the housing (1, 6) of the brake-pressure control-valve device a pilot valve for influencing the pressure build-up in the control chamber (31) of the brake-pressure control-valve device (I).

8. Brake-pressure control-valve device, controllable in dependence upon load, according to at least one of the preceding claims 1, 2 and 7, characterised by the following features:
a) the drive means (II) for the control member (39) displaceable in dependence upon load has a bearing block (73), which is arranged at the side of the housing (1, 6) of the brake-pressure control-valve device (I) opposite to the inlet valve (32, 33) and the outlet valve (33. 34) of the brake-pressure control-valve device (I);
b) the bearing block (73) has an aperture (70) extending in the direction of the longitudinal axis of the control member (39), in which aperture the control element (75) is arranged to be rotatable about its longitudinal axis and to be movable in the direction of the longitudinal axis of the bearing block (73);
c) the control element (75) has a curved track (76) extending transversely to its longitudinal axis, into which track there extends a pin-like component (72) arranged on the housing (1, 6) or on the bearing block (73);
d) the control member (39) is arranged between the inlet and outlet valves (32, 33, 34) and the contol element (75);
e) the pin-like component (72) and the control element (75) with curved track (76) so act together that, on rotation of the control element (75) about its longitudinal axis, the control element (75) is moved by the curved track (76) and the pin-like component (72) towards or away from the inlet valve (32, 33) and the outlet valve (33, 34) of the brake-pressure control-valve device (I), depending on the direction of rotation;
f) the control element (75) and the control member (39) arc so arranged in relation to each other that, when the control element (75) moves towards the inlet valve (32, 33) and the outlet valve (33, 34), the control member (39) is displaceable by the control element (75) towards the inlet valve (32, 33) and the outlet valve (33, 34).

9. Brake-pressure control-valve device, controllable in dependence upon load, according to at least one of the preceding claims 1, 2 and 7, characterised by the following features:
a) the drive means (II) for the control member (39) displaceable in dependence upon load has a bearing block (73) that is arranged at the side of the housing (1, 6) of the brake-pressure control-valve device (I) opposite to the inlet valve (32, 33) and the outlet valve (33, 34) of the brake-pressure control-valve device (I);
b) the bearing block (73) has an aperture (70) extending in the direction of the longitudinal axis of the control member (39), in which aperture the control element (75) is arranged to be rotatable about its longitudinal axis and to be movable in the direction of the longitudinal axis of the bearing block (73);
c) there is arranged on the bearing block (73) or on the housing (1, 6) a curved track which extends transversely to the longitudinal axis of the bearing block (73) and of the housing (1, 6), into which curved track there extends a pin-like component arranged on the control element (75);
d) the control member (39) is arranged between the inlet and outlet valves (32, 33, 34) and the control element (75);
e) the curved track and the control element (75) with the pin-like component so act together that, on rotation of the control element (75) about its longitudinal axis, the control element (75) is displaced by the curved track and the pin towards or away from the inlet valve (32, 33) and the outlet valve (33, 34) of the brake-pressure control-valve device (1), depending on the direction of rotation;
f) the control element (75) and the control member (39) are so arranged in relation to each other that. when the control element (75) moves towards the inlet valve (32, 33) and the outlet valve (33, 34), the control member (39) is displaceable by the control element (75) towards the inlet valve (32, 33) and the outlet valve (33, 34).

10. Brake-pressure control-valve device, controllable in dependence upon load, according to claim 8, characterised in that the pin-like component (72) is eccentrically arranged on a peg-like component (71), and the peg-like component (71) is so arranged on the housing (1, 6) or on the bearing block (73) to be rotatable about its longitudinal axis that, by means of rotation of the peg-like component (71) about its longitudinal axis, the control element (75) is displaceable towards or away from the inlet valve (32, 33) and the outlet valve (33, 34), depending on the direction of rotation.

11. Brake-pressure control-valve device, controllable in dependence upon load, according to at least one of the preceding claims 1, 2 and 7, characterised by the following features:
a) the drive means (II) for the control member (39) displaceable in dependence upon load has a bearing block (73) that is arranged at the side of the housing (1, 6) of the brake-pressure control-valve device (I) opposite to the inlet valve (32, 33) and the outlet valve (33, 34) of the brake-pressure control-valve device (I);
b) the bearing block (73) has an aperture (70) extending in the direction of the longitudinal axis of the control member (39), in which aperture the control element (82) is arranged to be rotatable about its longitudinal axis;
c) the control element (82) has on its side facing the control member (39) at least a first control curve (86, 87, 85, 92, 91, 90);
d) between the control member (39) and the side of the control element (82) having the first control curve (86, 89, 85, 92, 91, 90), the actuating element (88) is arranged to be movable in the aperture (70) in the direction of the longitudinal axis of the aperture (70);
e) the actuating element (88) has on its side facing the first control curve (86, 87, 85, 92. 91, 90) a second control curve (83, 84, 89), the first control curve (86, 87, 85. 92, 91, 90) and the second control curve (83, 84, 89) being so formed that they can be brought into abutment with one another;
f) the actuating element (88) is safeguarded from rotating about its longitudinal axis by means of a safety device (77, 78);
g) the control element (82) is safeguarded against unintentional movement in the direction of the longitudinal axis of the aperture (70) by security means (79, 80, 81);
h) the control element (82) with first control curve (86, 87, 85, 92, 91, 90) and the actuating element (88) with second control curve (83, 84, 89) are so arranged in relation to each other and act together that, on rotation of the control element (82) about its longitudinal axis, the actuating element (88) is displaced by the control element (82) towards the inlet valve (32, 33) and the outlet valve (33, 34);
i) the control member (39) is arranged between the inlet and outlet valves (32, 33, 34) and the actuating element (88);
k) the control element (82) and the actuating element (88) are so arranged with respect to the control member (39) that, when the control element (82) rotates about its longitudinal axis and the actuating element (88) is thereby caused to move towards the inlet valve (32, 33) and the outlet valve (33, 34), the control member (39) is displaceable by the actuating element (88) and, indirectly, by the control element (82) towards the inlet valve (32, 33) and the outlet valve (33, 34).

12. Brake-pressure control-valve device, controllable in dependence upon load, according to claim 11, characterised in that the security means (79, 80, 81) for the control element (82) are formed by a circumferential groove (79) in the control element (82) and a pin-like component (81) that is arranged directly or indirectly on the bearing block (73) or on the housing (1, 6) and extends into the circumferential groove (79).

13. Brake-pressure control-valve device, controllable in dependence upon load, according to claim 12, characterised in that the pin-like component (81) is eccentrically arranged on a peg-like component (80), and the peg-like component (80) is so arranged on the bearing block (73) or on the housing (1, 6) to be rotatable about its longitudinal axis that, by means of rotation of the peg-like component (80) about its longitudinal axis, the control element (82) is displaceable towards or away from the inlet valve (32, 33) and the outlet valve (33, 34), depending on the direction of rotation.

14. Brake-pressure control-valve device, controllable in dependence upon load, according to claim 11, characterised in that the safety device (77, 78) for safeguarding the actuating element (88) from rotation is formed by a groove (78), which is incorporated in the actuating element (88) and extends in the direction of the longitudinal axis of the actuating element (88), and a pin-like component (77), which is arranged on the bearing block (73) or on the housing (1, 6) and extends into the groove (78).

15. Brake-pressure control-valve device, controllable in dependence upon load, according to at least one of the preceding claims 3, 4, 5, 6, 8, 9, 10, 11, 12, 13 and 14, characterised in that the bearing block for receiving the control element (58, 75, 82) is formed by the region of the housing (1, 6) comprising the aperture (42, 70).

16. Brake-pressure control-valve device, controllable in dependence upon load, according to claim 14, characterised in that the pin-like component (77) is eccentrically arranged on a peg-like component and the peg-like component is so arranged on the bearing block (73) or on the housing (1, 6) to be rotatable about its longitudinal axis that, by means of rotation of the peg-like component about its longitudinal axis, the actuating element (88) is displaceable towards or away from the inlet valve (32, 33) and the outlet valve (33, 34), depending on the direction of rotation, by means of the pin-like component (77) engaging on stops on the actuating element (88).

## Revendications

1. Système à valves de régulation de force de freinage à commande en fonction de la charge, pour une installation de freinage de véhicule alimentée par un fluide sous pression, comprenant les éléments suivants :
a) le système à valves de régulation de force de freinage (I) possède une valve d'admission (32, 33) et une valve de sortie (33, 34) agencées dans un boîtier (1, 6) ;
b) un piston de régulation de pression de freinage (7, 3) agencé dans le boîtier (1, 6) sert à actionner la valve d'admission (32, 33) et la valve de sortie (33, 34) du système à valves de régulation de force de freinage (I) ;
c) la grandeur de régulation du système à valves de régulation de force de freinage (I) depuis la charge à vide jusqu'à la pleine charge est réglable au moyen d'un organe de positionnement (39) susceptible d'être déplacé en fonction de la charge et agencé dans le boîtier (1, 6);
d) un dispositif d'entraînement mécanique (II) sert au déplacement de l'organe de positionnement (39) en fonction de la charge ;
caractérisé en ce que
le dispositif d'entraînement (II) comprend un élément de positionnement (58, 75, 82) en rotation autour de son axe longitudinal qui, pour actionner l'organe de positionnement (39), est en liaison d'action ou susceptible d'être amené en liaison d'action avec l'organe de positionnement (39) directement ou via un élément d'actionnement (45, 88) mobile en direction de son axe longitudinal et en liaison d'action ou susceptible d'être amené en liaison d'action avec l'élément de positionnement (58, 75, 82), l'élément d'actionnement (45, 88) et l'élément de positionnement (58, 75, 82) ou l'élément de positionnement (58, 75, 82) étant agencé(s) du moins approximativement coaxialement à l'organe de positionnement (39), et l'élément de positionnement (58, 75, 82) ou l'élément d'actionnement (45, 88) étant mobile en direction de l'axe longitudinal de l'organe de positionnement (39) lors d'un mouvement de rotation de l'élément de positionnement (58, 75, 82) autour de son axe longitudinal, afin de déplacer l'organe de positionnement (39).

2. Système à valves de régulation de force de freinage selon la revendication 1, caractérisé en ce que le piston de régulation de pression de freinage (7, 3), la valve d'admission et de sortie (32, 33, 34), l'organe de positionnement (39) et le dispositif d'entraînement (II) sont agencés en rangée les uns derrière les autres en direction de l'axe longitudinal du système à valves de régulation de force de freinage (I).

3. Système à valves de régulation de force de freinage selon l'une au moins des revendications précédentes, caractérisé par les éléments suivants :
a) le dispositif d'entraînement (II) pour l'organe de positionnement (39) possède un bloc de montage (68, 63) qui est agencé sur le boîtier (1, 6) du système à valves de régulation de force de freinage (I), et ceci du côté opposé à la valve d'admission (32, 33) et à la valve de sortie (33, 34) ;
b) le bloc de montage (68, 63) possède une ouverture (93) qui s'étend en direction de l'axe longitudinal de l'organe de positionnement (39) et dans laquelle l'élément de positionnement (58) est agencé en rotation autour de son axe longitudinal ;
c) l'élément de positionnement (58) comprend un évidement (50) qui s'étend en direction de son axe longitudinal et dans lequel est agencé un élément d'actionnement (45) en forme de poussoir pour l'organe de positionnement (39) de façon mobile en direction de l'axe longitudinal de l'élément de positionnement (58) ;
d) l'organe de positionnement (39) est agencé entre la valve d'admission et de sortie (32, 33, 34) et l'élément d'actionnement (45) ;
e) une tige (51) est agencée sur l'élément d'actionnement (45), laquelle s'étend transversalement à l'axe longitudinal de l'élément d'actionnement (45) en éloignement depuis l'élément d'actionnement (45), laquelle traverse un guidage (49, 66) agencé dans l'élément de positionnement (58) et s'étendant en direction de l'axe longitudinal de l'élément de positionnement (58), et pénètre dans une piste incurvée (54, 62) agencée dans le bloc de montage (68, 63), l'élément de positionnement (58), l'élément d'actionnement (45) avec la tige (51) et la piste incurvée (54, 62) coopérant de telle manière que lors d'un mouvement de rotation de l'élément de positionnement (58) autour de son axe longitudinal et selon le sens de rotation, l'élément d'actionnement (45) en forme de poussoir est déplacé en direction de ou en éloignement de la valve d'admission (32, 33) et de la valve de sortie (33, 34) du système à valves de régulation de force de freinage (I) ;
f) l'élément d'actionnement (45) et l'organe de positionnement (39) sont agencés de telle manière l'un par rapport à l'autre que l'organe de positionnement (39) est susceptible d'être déplacé, lors d'un mouvement de l'élément d'actionnement (45) en direction de la valve d'admission (32, 33) et de la valve de sortie (33, 34), par l'élément d'actionnement (45) en direction de la valve d'admission (32, 33) et de la valve de sortie (33, 34).

4. Système à valves de régulation de force de freinage selon la revendication 3, caractérisé par les éléments suivants :
a) le guidage (49, 66) pour la tige (51) agencée sur l'élément d'actionnement (45) en forme de poussoir est formé par une fente ménagée dans l'élément de positionnement (58) ;
b) la piste incurvée (54, 62) agencée dans le bloc de montage (68, 63) est formée par une fente dans le bloc de montage (68, 63) qui s'étend sensiblement transversalement à l'axe longitudinal du bloc de montage (68, 63).

5. Système à valves de régulation de force de freinage selon l'une ou l'autre des revendications 1 et 2, caractérisé par les éléments suivants :
a) le dispositif d'entraînement (II) pour l'organe de positionnement (39) susceptible d'être déplacé en fonction de la charge possède un bloc de montage qui est agencé sur le boîtier (1, 6) du système à valves de régulation de force de freinage (I), et ceci du côté opposé à la valve d'admission (32, 33) et à la valve de sortie (33, 34) du système à valves de régulation de force de freinage (I) ;
b) le bloc de montage (68, 63) possède une ouverture (93) qui s'étend en direction de l'axe longitudinal de l'organe de positionnement (39) et dans laquelle est agencé l'élément de positionnement (58) en rotation autour de son axe longitudinal ;
c) l'élément de positionnement (58) comprend un évidement (50) qui s'étend en direction de son axe longitudinal et dans lequel est agencé un élément d'actionnement (45) en forme de poussoir pour l'organe de positionnement (39) de façon mobile en direction de l'axe longitudinal de l'élément de positionnement (58) ;
d) l'organe de positionnement (39) est agencé entre la valve d'admission et de sortie (32, 33, 34) et l'élément d'actionnement (45) ;
e) sur l'élément d'actionnement (45) est agencée une tige (51) qui s'étend transversalement à l'axe longitudinal de l'élément d'actionnement (45) en éloignement depuis ce dernier, qui traverse une piste incurvée agencée dans l'élément de positionnement (58) et s'étendant transversalement à l'axe longitudinal de l'élément de positionnement (58), et qui pénètre dans un guidage agencé dans le bloc de montage (68, 63) et s'étendant en direction de l'axe longitudinal du bloc de montage (68, 63), l'élément de positionnement (58), l'élément d'actionnement (45) avec la tige (51), et la piste incurvée coopérant de telle manière que lors d'un mouvement de rotation de l'élément de positionnement (58) autour de son axe longitudinal et selon le sens de rotation, l'élément d'actionnement (45) en forme de poussoir pour l'organe de positionnement (39) est déplacé en direction de ou en éloignement de la valve d'admission (32, 33) et de la valve de sortie (33, 34) du système à valves de régulation de force de freinage (I) ;
f) l'élément d'actionnement (45) et l'organe de positionnement (39) sont agencés de telle manière l'un par rapport à l'autre que l'organe de positionnement (39) peut être déplacé, lors d'un mouvement de l'élément d'actionnement (45) en direction de la valve d'admission (32, 33) et de la valve de sortie (33, 34), par l'élément d'actionnement (45) en direction de la valve d'admission (32, 33) et de la valve de sortie (33, 34).

6. Système à valves de régulation de force de freinage selon la revendication 5, caractérisé par les éléments suivants :
a) le guidage pour la tige (51) agencée sur l'élément d'actionnement (45) en forme de poussoir est formé par une fente ménagée dans le bloc de montage (68, 63) ;
b) la piste incurvée agencée dans l'élément de positionnement (58) est formée par une fente dans l'élément de positionnement (58) qui s'étend sensiblement transversalement à l'axe longitudinal de l'élément de positionnement (58).

7. Système à valves de régulation de force de freinage selon l'une quelconque au moins des revendications précédentes, caractérisé en ce qu'une valve pilote pour influencer l'établissement de la pression dans la chambre de commande (31) du système à valves de régulation de force de freinage (I) est agencée dans ou sur le boîtier (1, 6) du système à valves de régulation de force de freinage.

8. Système à valves de régulation de force de freinage selon l'une quelconque au moins des revendications 1, 2 ou 7, caractérisé par les éléments suivants :
a) le dispositif d'entraînement (II) pour l'organe de positionnement (39) susceptible d'être déplacé en fonction de la charge possède un bloc de montage (73) qui est agencé sur le boîtier (1, 6) du système à valves de régulation de force de freinage, et ceci du côté opposé à la valve d'admission (32, 33) et à la valve de sortie (33, 34) du système à valves de régulation de force de freinage (I) ;
b) le bloc de montage (73) possède une ouverture (70) qui s'étend en direction de l'axe longitudinal de l'organe de positionnement (39) et dans laquelle est agencé l'élément de positionnement (75) en rotation autour de son axe longitudinal et de façon mobile en direction de l'axe longitudinal du bloc de montage (73) ;
c) l'élément de positionnement (75) comprend une piste incurvée (76) qui s'étend transversalement à son axe longitudinal et jusque dans laquelle s'étend un composant (72) en forme de tige agencé sur le boîtier (1, 6) ou sur le bloc de montage (73) ;
d) l'organe de positionnement (39) est agencé entre la valve d'admission et de sortie (32, 33, 34) et l'élément de positionnement (75) ;
e) le composant en forme de tige (72) et l'élément de positionnement (75) avec la piste incurvée (76) coopèrent de telle manière que lors d'un mouvement de rotation de l'élément de positionnement (75) autour de son axe longitudinal et selon le sens de rotation, l'élément de positionnement (75) est déplacé au moyen de la piste incurvée (76) et du composant en forme de tige (72) en direction de ou en éloignement de la valve d'admission (32, 33) et de la valve de sortie (33, 34) du système à valves de régulation de force de freinage (I) ;
f) l'élément de positionnement (75) et l'organe de positionnement (39) sont agencés de telle manière l'un par rapport à l'autre que l'organe de positionnement (39) peut être déplacé, lors d'un mouvement de l'élément de positionnement (75) en direction de la valve d'admission (32, 33) et de la valve de sortie (33, 34), par l'élément de positionnement (75) en direction de la valve d'admission (32, 33) et de la valve de sortie (33, 34).

9. Système à valves de régulation de force de freinage selon l'une au moins des revendications 1, 2 ou 7, caractérisé par les éléments suivants :
a) le dispositif d'entraînement (II) pour l'organe de positionnement (39) susceptible d'être déplacé en fonction de la charge possède un bloc de montage (73) qui est agencé sur le boîtier (1, 6) du système à valves de régulation de force de freinage (I), et ceci du côté opposé à la valve d'admission (32, 33) et à la valve de sortie (33, 34) du système à valves de régulation de force de freinage (I) ;
b) le bloc de montage (73) possède une ouverture (70) qui s'étend en direction de l'axe longitudinal de l'organe de positionnement (39) et dans laquelle est agencé l'élément de positionnement (75) avec faculté de rotation autour de son axe longitudinal et faculté de se déplacer en direction de l'axe longitudinal du bloc de montage (73) ;
c) une piste incurvée s'étendant transversalement à l'axe longitudinal du bloc de montage (73) ou du boîtier (1, 6) est agencée sur le bloc de montage (73) ou sur le boîtier (1, 6), dans laquelle pénètre un composant en forme de tige agencé sur l'élément de positionnement (75) ;
d) l'organe de positionnement (39) est agencé entre la valve d'admission et de sortie (32, 33, 34) et l'élément de positionnement (75) ;
e) la piste incurvée et l'élément de positionnement (75) avec le composant en forme de tige coopèrent de telle manière que lors d'un mouvement de rotation de l'élément de positionnement (75) autour de son axe longitudinal et selon le sens de rotation, l'élément de positionnement (75) est déplacé au moyen de la piste incurvée et de la tige en direction de ou en éloignement de la valve d'admission (32, 33) et de la valve de sortie (33, 34) du système à valves de régulation de force de freinage (I) ;
f) l'élément de positionnement (75) et l'organe de positionnement (39) sont agencés de telle manière l'un par rapport à l'autre que l'organe de positionnement (39) peut être déplacé, lors d'un mouvement de l'élément de positionnement (75) en direction de la valve d'admission (32, 33) et de la valve de sortie (33, 34), par l'élément de positionnement (75) en direction de la valve d'admission (32, 33) et de la valve de sortie (33, 34).

10. Système à valves de régulation de force de freinage selon la revendication 8, caractérisé en ce que le composant en forme de tige (72) est agencé de façon excentrique sur un composant en forme de tenon (71 ), et en ce que le composant en forme de tenon (71) est agencé en rotation autour de son axe longitudinal sur le boîtier (1, 6) ou sur le bloc de montage (73) de telle manière que lors d'une rotation du composant en forme de tenon (71) autour de son axe longitudinal et selon le sens de rotation, l'élément de positionnement (75) est susceptible d'être déplacé en direction de ou en éloignement de la valve d'admission (32, 33) et de la valve de sortie (33, 34).

11. Système à valves de régulation de force de freinage selon l'une au moins des revendications 1, 2 ou 7, caractérisé par les éléments suivants :
a) le dispositif d'entraînement (II) pour l'organe de positionnement (39) susceptible d'être déplacé en fonction de la charge possède un bloc de montage (73) qui est agencé sur le boîtier (1, 6) du système à valves de régulation (I), et ceci du côté opposé à la valve d'admission (32, 33) et à la valve de sortie (33, 34) du système à valves de régulation de force de freinage ;
b) le bloc de montage (73) possède une ouverture (70) qui s'étend en direction de l'axe longitudinal de l'organe de positionnement (39) et dans laquelle est agencé l'élément de positionnement (82) en rotation autour de son axe longitudinal ;
c) l'élément de positionnement (82) possède au moins une première came de commande (86, 87, 85, 92, 91, 90) sur son côté orienté vers l'organe de positionnement (39) ;
d) l'élément d'actionnement (88) est agencé dans l'ouverture (70) de façon mobile en direction de l'axe longitudinal de l'ouverture (70) entre l'organe de positionnement (39) et le côté de l'élément de positionnement (82) qui présente la première came de commande (86, 87, 85, 92, 91, 90) ;
e) l'élément d'actionnement (88) possède sur son côté orienté vers la première came de commande (86, 87, 85, 92, 91, 90) une seconde came de commande (83, 84, 89), la première came de commande (86, 87, 85, 92, 91, 90) et la seconde came de commande (83, 84, 89) étant réalisées de manière à pouvoir être amenées en appui l'une contre l'autre ;
f) l'élément d'actionnement (88) est bloqué à l'encontre d'une rotation autour de son axe longitudinal au moyen d'un blocage anti-rotation (77, 78) ;
g) l'élément de positionnement (82) est bloqué à l'encontre d'un mouvement inopiné en direction de l'axe longitudinal de l'ouverture (70) au moyen d'organes de blocage (79, 80, 81) ;
h) l'élément de positionnement (82) présentant la première came de commande (86, 87, 85, 92, 91, 90) et l'élément d'actionnement (88) présentant la seconde came de commande (83, 84, 89) sont agencés l'un par rapport à l'autre et coopèrent de telle manière que lors d'un mouvement de rotation de l'élément de positionnement (82) autour de son axe longitudinal, l'élément d'actionnement (88) est déplacé par l'élément de positionnement (82) en direction de la valve d'admission (32, 33) et de la valve de sortie (33, 34) ;
i) l'organe de positionnement (39) est agencé entre la valve d'admission et de sortie (32, 33, 34) et l'élément d'actionnement (88) ;
k) l'élément de positionnement (82) et l'élément d'actionnement (88) sont agencés de telle manière par rapport à l'organe de positionnement (39) que lors d'un mouvement de rotation de l'élément de positionnement (82) autour de son axe longitudinal et lors d'un mouvement ainsi provoqué de l'élément d'actionnement (88) en direction de la valve d'admission (32, 33) et de la valve de sortie (33, 34), l'organe de positionnement (39) peut être déplacé par l'élément d'actionnement (88) et indirectement par l'élément de positionnement (82) en direction de la valve d'admission (32, 33) et de la valve de sortie (33, 34).

12. Système à valves de régulation de force de freinage selon la revendication 11, caractérisé en ce que les organes de blocage (79, 80, 81) pour l'élément de positionnement (82) sont formés par une gorge périphérique (79) dans l'élément de positionnement (82) et par un composant en forme de tige (81) qui est agencé directement ou indirectement sur le bloc de montage (73) ou sur le boîtier (1, 6) et qui pénètre dans la gorge périphérique (79).

13. Système à valves de régulation de force de freinage selon la revendication 12, caractérisé en ce que le composant en forme de tige (81) est agencé de façon excentrique sur un composant en forme de tenon (80), et en ce que le composant en forme de tenon (80) est agencé en rotation autour de son axe longitudinal sur le bloc de montage (73) ou sur le boîtier (1, 6) de telle manière que lors d'une rotation du composant en forme de tenon (80) autour de son axe longitudinal et selon le sens de rotation, l'élément de positionnement (82) est susceptible d'être déplacé en direction de ou en éloignement de la valve d'admission (32, 33) et de la valve de sortie (33, 34).

14. Système à valves de régulation de force de freinage selon la revendication 11, caractérisé en ce que le blocage anti-rotation (77, 78) pour l'élément d'actionnement (88) est formé par une gorge (78) ménagée dans l'élément d'actionnement (88) et s'étendant en direction de l'axe longitudinal de l'élément d'actionnement (88), et par un composant en forme de tige (77) qui est agencé sur le bloc de montage (73) ou sur le boîtier (1, 6) et qui pénètre dans la gorge (78).

15. Système à valves de régulation de force de freinage selon l'une au moins des revendications 3, 4, 5, 6, 8, 9, 10, 11, 12, 13 et 14, caractérisé en ce que le bloc de montage pour recevoir l'élément de positionnement (58, 75, 82) est formé par la région du boîtier (1, 6) qui présente l'ouverture (42, 70).

16. Système à valves de régulation de force de freinage selon la revendication 14, caractérisé en ce que le composant en forme de tige (77) est agencé de façon excentrique sur un composant en forme de tenon, et en ce que le composant en forme de tenon est agencé en rotation autour de son axe longitudinal sur le bloc de montage (73) ou sur le boîtier (1, 6) de telle manière que lors d'une rotation du composant en forme de tenon autour de son axe longitudinal et selon le sens de rotation, l'élément d'actionnement (88) est susceptible d'être déplacé en direction de ou en éloignement de la valve d'admission (32, 33) et de la valve de sortie (33, 34) au moyen du composant en forme de tige (77) qui attaque des butées de l'élément d'actionnement (88).
